(19) Europäisches Patentamt
European Patent Office
Office européen des brevets

(11) **EP 4 001 319 A1**

(12) **EUROPEAN PATENT APPLICATION**
published in accordance with Art. 153(4) EPC

(43) Date of publication:
**25.05.2022 Bulletin 2022/21**

(21) Application number: **20844897.7**

(22) Date of filing: **05.06.2020**

(51) International Patent Classification (IPC):
**C08F 6/22** (2006.01)  **C08F 20/18** (2006.01)
**C08L 33/04** (2006.01)  **C08K 3/013** (2018.01)
**B29C 48/08** (2019.01)  **B29C 48/395** (2019.01)
**B29C 48/92** (2019.01)

(52) Cooperative Patent Classification (CPC):
**B29C 48/08; B29C 48/395; B29C 48/92;**
**C08F 6/22; C08F 20/18; C08K 3/013; C08L 33/04**

(86) International application number:
**PCT/JP2020/022312**

(87) International publication number:
**WO 2021/014789 (28.01.2021 Gazette 2021/04)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.07.2019  JP 2019134142**

(71) Applicant: **Zeon Corporation
Tokyo 100-8246 (JP)**

(72) Inventors:
• **MASUDA, Hirofumi
Tokyo 100-8246 (JP)**
• **TSUNEKUNI, Nobuhiro
Kurashiki-shi, Okayama 713-8103 (JP)**

(74) Representative: **Maiwald Patent- und
Rechtsanwaltsgesellschaft mbH
Elisenhof
Elisenstraße 3
80335 München (DE)**

(54) **ACRYLIC RUBBER SHEET HAVING EXCELLENT WATER RESISTANCE**

(57)    An acrylic rubber sheet excellent in storage stability and water resistance, a method for producing the same, a rubber mixture containing the acrylic rubber sheet and a rubber cross-linked product thereof are provided. The acrylic rubber sheet according to the present invention includes an acrylic rubber having a reactive group and having a weight average molecular weight (Mw), a ratio of a Z-average molecular weight (Mz) and a weight average molecular weight (Mw) in a specific range. The acrylic rubber sheet according to the present invention has an ash content of 0.2% by weight or less, an amount of gel insoluble in methyl ethyl ketone is 50% by weight or less, and a water content of less than 1% by weight, and is excellent in water resistance and highly well-balanced in strength properties and processability.

FIG.1

**Description**

[FIELD OF THE INVENTION]

The present invention relates to: an acrylic rubber sheet; a method for producing the same; and an acrylic rubber bale, a rubber mixture, and a rubber cross-linked product obtained from the acrylic rubber sheet. More specifically, the present invention relates to: an acrylic rubber sheet excellent in water resistance and having a highly well-balanced strength properties and processability; a method for producing the same; an acrylic rubber bale obtained by laminating the acrylic rubber sheet; a rubber mixture obtained by mixing the acrylic rubber sheet or the acrylic rubber bale; and a rubber cross-linked product obtained by cross-linking the rubber mixture.

Acrylic rubber is a polymer mainly composed of acrylic acid ester and is generally known as rubber excellent in heat resistance, oil resistance, and ozone resistance, and is widely used in fields related to automobiles.

Such acrylic rubber is usually commercialized by emulsion-polymerizing the monomer mixture constituting the acrylic rubber, coagulating the obtained emulsion polymerization liquid by adding a coagulant to the emulsion polymerization liquid, drying the hydrous crumbs obtained by the coagulation, and molding the dried hydrous crumbs in a crumb shape, a sheet shape, or a bale shape.

As a method for producing a crumb-shaped acrylic rubber, for example, Patent Document 1 (International Publication WO 2018/079783 Pamphlet) discloses a method in which, a monomer component including ethyl acrylate, n-butyl acrylate, and mono-n-butyl fumarate is emulsified using an emulsifier including pure water, sodium lauryl sulfate and polyoxyethylene dodecyl ether, emulsion polymerization is performed in the presence of a polymerization initiator up to a polymerization conversion rate of 95% by weight to obtain an emulsion polymerization liquid, and sodium sulfate is continuously added to produce hydrous crumbs, and subsequently, the produced hydrous crumbs are washed with industrial water 4 times, washed once with acidic water of pH3, and washed once with pure water, and then dried with a hot air dryer at 110°C for 1 hour, thereby to produce an acrylic rubber excellent in water resistance (assessed by volume change after immersion in 80°C distilled water for 70 hours) with a small residual amount of the emulsifier and the coagulant. However, Patent Document 1 has no description of using in the form of a sheet, and there is a problem that handling a sticky acrylic rubber in the form of a crumb has poor workability and storage stability. Further, the acrylic rubber thus obtained in the present invention is poor in processability, and also regarding water resistance, a high degree of water resistance is required in a more severe environment.

Regarding the production of the sheet-shaped acrylic rubber, for example, Patent Document 2 (Japanese Patent Application Publication HI-225512) discloses a method in which a twin-screw extrusion dryer having a feed barrel, a dewatering barrel, a standard barrel, a vent barrel, and a vacuum barrel is used to supply nitrile rubber (NBR) crumbs having a water content of about 50% to the feed barrel, to dehydrate most of the water content by the dehydration barrel, and then to suck and remove the residual water content and the vaporized substances by the vacuum barrel, and to continuously extrude the rubber in a strip shape through a breaker plate and a die portion, and acrylic rubber crumbs are also described as the rubber crumbs to be applied. However, the patent document does not describe a method for obtaining an acrylic rubber sheet having excellent water resistance and processability.

On the other hand, regarding the gel amount of the acrylic rubber, for example, in Patent Document 3 (International Publication WO 2018/143101 Pamphlet) discloses a technology in which an (meth) acrylic acid ester and an ion-cross-linking monomer are emulsion-polymerized, an acrylic rubber having a complex viscosity ($[\eta]$ 100°C) at 100°C of 3,500 Pa·s or less and a ratio ($[\eta]$ 100°C/$[\eta]$ 60°C) of complex viscosity ($[\eta]$ 60°C) at 60°C to the complex viscosity ($[\eta]$ 100°C) at 100°C is 0.8 or less, is used to enhance extrusion moldability, particularly discharge amount, discharge length and surface texture of the rubber composition containing a reinforcing agent and a cross-linking agent. Patent Document 3 describes that the amount of gel insoluble in tetrahydrofuran of the acrylic rubber used in this technique is 80% by weight or less, preferably 5 to 80% by weight, and it is preferable that as much as possible exists in the range of 70% by weight or less, and when the gel amount becomes less than 5% by weight the extrudability deteriorates. Further, patent Document3 describes that the weight average molecular weight (Mw) of the acrylic rubber used is 200,000 to 1,000,000, and when the weight average molecular weight (Mw) exceeds 1,000,000, it is unfavorable because the viscoelasticity of the acrylic rubber is excessively high. However, in this patent document, there is no description of a method for highly balancing kneading processability such as Banbury with high strength and improving water resistance to a high degree, and this patent document does not disclose an acrylic rubber formed in a sheet shape, either. In addition, it was found out that there is no correlation between the amount of gel insoluble in the tetrahydrofuran of the acrylic rubber and the amount of gel insoluble in the methyl ethyl ketone of the present invention.

[CITATION LIST]

[PATENT LITERATURE]

[Patent Document 1] International Publication WO 2018/079783 Pamphlet
[Patent Document 2] Japanese Patent Application Publication H1-225512
[Patent Document 3] International Publication WO 2018/143101 Pamphlet

[SUMMARY OF THE INVENTION]

[TECHNICAL PROBLEM]

The present invention has been made considering the actual situation as mentioned above, and the present invention is aimed to provide: an acrylic rubber sheet excellent in water resistance and having a highly well-balanced strength properties and processability during kneading Banbury and the like; a method for producing the same; an acrylic rubber bale; a rubber mixture obtained by mixing the acrylic rubber sheet or the acrylic rubber bale; and a rubber cross-linked product obtained by cross-linking the rubber mixture.

[MEANS TO SOLVE THE PROBLEM]

As a result of diligent studies conducted by the present inventors in view of the above problems, the present inventors have found out that an acrylic rubber sheet with a specific ash content, a specific gel amount and a specific water content, which is made of acrylic rubber having a reactive group, having a specific molecular weight, and having a specific molecular weight distribution focusing on the high molecular weight region, is excellent in water resistance and is highly well-balanced in strength properties and processability during kneading by Banbury mixer or the like.
The present inventors have found out that the effect of the present invention can be remarkably improved, when a sheet constituted by an acrylic rubber having a specific monomer composition has a specific ash component and a specific gravity. Further, the inventors of the present invention have found out that the above-mentioned acrylic rubber sheet can be easily produced by emulsion-polymerizing the specific monomer, coagulating the emulsion polymerization liquid to generate the hydrous crumbs, washing the generated crumbs, dehydrating, drying and molding the hydrous crumbs by a specific screw-type extruder after the washing, and extruding the sheet-shaped dry rubber.
The present inventors have also found that an acrylic rubber sheet in which the effects of the present invention are further improved can be obtained by specifying the coagulation method and stirring speed in the coagulation process, the rotation speed, the extrusion rate, the ratio between the extrusion rate and the rotation speed, the degree of pressure reduction of the drying barrel and the resin pressure of the die portion.
The present inventors have further found out that it is difficult to control the amount of gel insoluble in methyl ethyl ketone of the acrylic rubber during production, and especially when the polymerization conversion rate is increased and the molecular weight of acrylic rubber is increased for the purpose of improving handleability the acrylic rubber sheet, the amount of gel insoluble in methyl ethyl ketone sharply increases, so that the processability of the acrylic rubber sheet during kneading of Banbury is deteriorated, and that the sharply increased amount of gel insoluble in the methyl ethyl ketone disappear by drying the hydrous crumbs in the screw-type extruder to a state that does not substantially contain water (specific water content) and melting and kneading the hydrous crumbs. The present inventors have further found out that it is difficult to dry the acrylic rubber with low specific heat to a specific water content in a screw-type extruder, but the amount of gel insoluble in the methyl ethyl ketone in the resulting acrylic rubber sheet can be reliably reduced, so that the processability during kneading of Banbury and the like can be remarkably improved, by setting the temperature of the hydrous crumbs to a specified temperature or higher.
The present inventors have completed the present invention based on these new findings.
Thus, according to the present invention, there is provided an acrylic rubber sheet comprising an acrylic rubber having a reactive group, having a weight average molecular weight (Mw) of 100,000 to 5,000,000, and having a ratio (Mz / Mw) of a z-average molecular weight (Mz) with respect to the weight average molecular weight (Mw) of 1.3 or more, wherein an ash content is 0.2% by weight or less, an amount of gel insoluble in methyl ethyl ketone is 50% by weight or less, and a water content is less than 1% by weight.
In the acrylic rubber sheet of the present invention, acrylic rubber content in the acrylic rubber is preferably 90% by weight or more.
In the acrylic rubber sheet of the present invention, the acrylic rubber sheet is preferably a melt kneading sheet.
In the acrylic rubber sheet of the present invention, the acrylic rubber preferably includes: at least one (meth)

acrylic acid ester selected from the group consisting of (meth) acrylic acid alkyl ester and (meth) acrylic acid alkoxyalkyl ester; a monomer containing a reactive group; and other copolymerizable monomer.

Further, in the acrylic rubber sheet of the present invention, a total amount of sodium and sulfur in the ash is preferably 30% by weight or more in terms of proportion to total ash content.

In the acrylic rubber sheet of the present invention, the content of at least one element selected from the group consisting of sodium, sulfur, calcium, magnesium and phosphorus in the ash is preferably 80% by weight or more.

In the acrylic rubber sheet of the present invention, it is preferable that the total amount of sodium and sulfur in the ash is 70% by weight or more in terms of proportion to total ash content.

In the acrylic rubber sheet of the present invention, a ratio of sodium to sulfur in the ash ([Na]/[S]) is preferably 0.7 to 1 by weight ratio.

In the acrylic rubber sheet of the present invention, an amount of gel insoluble in methyl ethyl ketone is preferably 10% by weight or less.

Further, in the acrylic rubber sheet of the present invention, a specific gravity is preferably in the range of 0.7 to 1.5.

In the acrylic rubber sheet of the present invention, a specific gravity is more preferably in the range of 0.8 to 1.4.

According to the present invention, as a method for producing an acrylic rubber sheet, there is provided a method for producing an acrylic rubber sheet, the method comprising: an emulsion polymerization process to emulsify a monomer component by water and an emulsifier, the monomer containing at least one (meth) acrylic acid ester selected from the group consisting of (meth) acrylic acid alkyl ester and (meth) acrylic acid alkoxyalkyl ester, a monomer containing a reactive group, and other copolymerizable monomer as necessary, and to emulsion-polymerize the obtained emulsified monomer component in the presence of a polymerization catalyst to obtain an emulsion polymerization liquid; a coagulation process to generate hydrous crumbs by contacting the obtained emulsion polymerization liquid with a coagulant liquid; a washing process to wash the generated hydrous crumbs; and a dehydration, drying, and molding process to dehydrate the washed hydrous crumbs by a dehydration barrel to a water content of 1 to 40% by weight, using a screw-type extruder provided with the dehydration barrel having a dehydration slit, a drying barrel for drying under reduced pressure, and a die at a tip end, and then to dry the dehydrated hydrous crumbs by the drying barrel to the water content of less than 1% by weight, and to extrude a sheet-shaped dry rubber from the die.

In the method for producing an acrylic rubber sheet of the present invention, it is preferable that the contact of the emulsion polymerization liquid and the coagulant liquid is adding the emulsion polymerization liquid to the coagulant liquid being stirred.

In the method for producing an acrylic rubber sheet of the present invention, a stirring speed (rotation speed) of the coagulant liquid being stirred is preferably 100 rpm or higher.

In the method for producing an acrylic rubber sheet of the present invention, a stirring speed (rotation speed) of the coagulant liquid being stirred is more preferably in the range of 200 to 1,000 rpm.

In the method for producing an acrylic rubber sheet of the present invention, a peripheral speed of the coagulant liquid being stirred is preferably 0.5 m/s or higher.

In the method for producing an acrylic rubber sheet of the present invention, a peripheral speed of the coagulant liquid being stirred is more preferably 1.5 m/s or higher.

In the method for producing an acrylic rubber sheet of the present invention, a temperature of the hydrous crumbs supplied to the screw-type extruder is more preferably 40°C or higher.

In the method for producing an acrylic rubber sheet of the present invention, a rotation speed (N) of the screw-type extruder is preferably in the range of 10 to 1,000 rpm.

In the method for producing an acrylic rubber sheet of the present invention, an extrusion rate (Q) of the screw-type extruder is preferably 100 to 1,500 kg/hr.

In the method for producing an acrylic rubber sheet of the present invention, a ratio (Q / N) of the extrusion rate (Q) and the rotation speed (N) of the screw-type extruder is preferably in the range of 1 to 20.

In the method for producing an acrylic rubber sheet of the present invention, a ratio (Q / N) of the extrusion rate (Q) and the rotation speed (N) of the screw-type extruder is more preferably in the range of 2 to 10.

Further, in the method for producing an acrylic rubber sheet of the present invention, a degree of pressure reduction in the drying barrel section of the screw-type extruder is preferably in the range of 1 to 50 kPa.

Further, in the method for producing an acrylic rubber sheet of the present invention, a resin pressure of the die portion of the screw-type extruder is preferably in the range of 0.1 to 10 MPa.

According to the present invention, there is also provided an acrylic rubber bale obtained by laminating the above acrylic rubber sheet.

According to the present invention, there is also provided a rubber mixture obtained by mixing the acrylic rubber sheet or the acrylic rubber bale with a filler and a cross-linking agent.

Furthermore, according to the present invention, there are provided a method for producing a rubber mixture in which a filler and a cross-linking agent are mixed with the acrylic rubber sheet or the acrylic rubber bale by using a mixer, and a method for producing a rubber mixture in which a cross-linking agent is mixed after the above acrylic rubber sheet or the acrylic rubber bale is mixed with a filler.

Thus, according to the present invention, a rubber cross-linked product obtained by cross-linking the above rubber mixture is provided.

[EFFECT OF THE INVENTION]

According to the present invention, there are provided: an acrylic rubber sheet excellent in water resistance and having a highly well-balanced strength properties and processability; a method for producing the same; an acrylic rubber bale obtained by laminating the acrylic rubber sheet; a rubber mixture containing the acrylic rubber sheet or the acrylic rubber bale; and a rubber cross-linked product obtained by cross-linking the rubber mixture.

[BRIEF DESCRIPTION OF THE DRAWINGS]

FIG. 1 is a diagram schematically showing an example of an acrylic rubber production system used for producing an acrylic rubber sheet according to an embodiment according to the present invention.
FIG. 2 is a diagram showing a configuration of the screw-type extruder of FIG. 1.
FIG. 3 is a diagram showing a configuration of a carrier-type cooling device used as the cooling device of FIG. 1.

[DETAILED DESCRIPTION OF EMBODIMENTS]

The acrylic rubber sheet of the present invention comprises an acrylic rubber having a reactive group, having a weight average molecular weight (Mw) of 100,000 to 5,000,000, and having a ratio (Mz/Mw) of Z-average molecular weight (Mz) with respect to the weight average molecular weight (Mw) is 1.3 or more, wherein an ash content is 0.2% by weight or less, an amount of gel insoluble in methyl ethyl ketone is 50% by weight or less, and a water content is less than 1% by weight.

<Monomer Component>

The acrylic rubber sheet of the present invention includes acrylic rubber having a reactive group. The reactive group is not particularly limited and may be appropriately selected depending on the intended purpose, but when it is preferably at least one functional group selected from the group consisting of a carboxyl group, an epoxy group and a halogen group, more preferably at least one functional group selected from the group consisting of a carboxyl group, an epoxy group and a chlorine atom, it is preferable, since the cross-linking property of the acrylic rubber sheet can be highly improved. As the acrylic rubber having such a reactive group, an acrylic rubber may be provided with a reactive group in a post-reaction, but an acrylic rubber obtained by copolymerizing a monomer containing a reactive group is preferable.

Further, the acrylic rubber constituting the acrylic rubber sheet of the present invention is preferably an acrylic rubber containing a (meth) acrylic acid ester, or an acrylic rubber containing at least one (meth) acrylic acid ester selected from the group consisting of (meth) acrylic acid alkyl ester and (meth) acrylic acid alkoxyalkyl ester. In the present invention, "(meth) acrylic acid ester" is used as a general term referring the esters of acrylic acid and / or methacrylic acid.

Specific examples of the acrylic rubber having a preferable reactive group include acrylic rubbers including: at least one (meth) acrylic acid ester selected from the group consisting of (meth) acrylic acid alkyl ester and (meth) acrylic acid alkoxyalkyl ester; a monomer containing a reactive group; and other copolymerizable monomer which can be included as required.

The (meth) acrylic acid alkyl ester is not particularly limited, but examples thereof usually include a (meth) acrylic acid alkyl ester having an alkyl group having 1 to 12 carbon atoms, preferably a (meth) acrylic acid alkyl ester having an alkyl group having 1 to 8 carbon atoms, more preferably a (meth) acrylic acid alkyl ester having an alkyl group having 2 to 6 carbon atoms.

Specific examples of such alkyl (meth) acrylate include methyl (meth) acrylate, ethyl (meth) acrylate, n-propyl (meth) acrylate, isopropyl (meth) acrylate, and n-butyl (meth) acrylate, isobutyl (meth) acrylate, n-hexyl (meth) acrylate, 2-ethylhexyl (meth) acrylate, cyclohexyl (meth) acrylate, and the like, preferably ethyl (meth) acrylate, n-butyl (meth) acrylate, and more preferably ethyl acrylate and n-butyl acrylate.

The (meth) acrylic acid alkoxyalkyl ester is not particularly limited, but examples thereof usually include a (meth) acrylic acid alkoxyalkyl ester having an alkoxyalkyl group having 2 to 12 carbon atoms, preferably a (meth) acrylic acid alkoxyalkyl ester having an alkoxyalkyl group having 2 to 8 carbon atoms, more preferably a (meth) acrylic acid alkoxyalkyl ester having an alkoxyalkyl group having 2 to 6 carbon atoms.

Specific examples of such (meth) acrylic acid alkoxyalkyl ester include methoxymethyl (meth) acrylate, methoxyethyl (meth) acrylate, methoxypropyl (meth) acrylate, methoxy butyl (meth) acrylate, ethoxymethyl (meth) acrylate, ethoxyethyl (meth) acrylate, propoxyethyl (meth) acrylate, butoxyethyl (meth) acrylate, and the like. Among these, methoxyethyl (meth) acrylate, ethoxyethyl (meth) acrylate and the like are preferable, and methoxyethyl acrylate and ethoxyethyl acrylate are more preferable.

The at least one of (meth) acrylic acid ester selected from the group consisting of these (meth) acrylic acid alkyl esters and (meth) acrylic acid alkoxyalkyl esters may be used alone or in combination of two or more, and the ratio of the (meth) acrylic acid ester in the acrylic rubber is usually 50% by weight or more, preferably 60% by weight or more, more preferably 70% by weight or more, particularly preferably 80% by weight or more, most preferably 90% by weight or more. If the amount of (meth) acrylic acid ester in the monomer component is excessively small, it is not preferable, since the weather resistance, heat resistance, and oil resistance of the obtained acrylic rubber may decrease. Further, when the amount of (meth)acrylic acid ester in the monomer component is usually in the range of 50 to 99.99% by weight, preferably 70 to 99.9% by weight, more preferably 80 to 99.5% by weight, most preferably 87 to 99% by weight, it is preferable, since weather resistance, heat resistance and oil resistance are highly well-balanced.

The above monomer containing a reactive group is not particularly limited and may be appropriately selected depending on the intended purpose, but a monomer having at least one functional group selected from the group consisting of a carboxyl group, an epoxy group and a halogen group is preferable, and a monomer having at least one functional group selected from the group consisting of a carboxyl group, an epoxy group and a chlorine atom is particularly preferable.

The monomer having a carboxyl group is not particularly limited, but ethylenically unsaturated carboxylic acid can be preferably used. Examples of the ethylenically unsaturated carboxylic acid include, for example, ethylenically unsaturated monocarboxylic acid, ethylenically unsaturated dicarboxylic acid, ethylenically unsaturated dicarboxylic acid monoester, and the like, and among these, ethylenically unsaturated dicarboxylic acid monoester is particularly preferable, since the said monoester can further improve the compression set resistance property when the acrylic rubber is a rubber cross-linked product.

The ethylenically unsaturated monocarboxylic acid is not particularly limited, but an ethylenically unsaturated monocarboxylic acid having 3 to 12 carbon atoms is preferable, and examples thereof include acrylic acid, methacrylic acid, $\alpha$-ethylacrylic acid, crotonic acid, and cinnamic acid.

The ethylenically unsaturated dicarboxylic acid is not particularly limited, but an ethylenically unsaturated dicarboxylic acid having 4 to 12 carbon atoms is preferable, and examples thereof include: butendioic acid such as fumaric acid and maleic acid; itaconic acid; citraconic acid; and the like. It should be noted that the ethylenically unsaturated dicarboxylic acid also includes those which exist as an anhydride.

The ethylenically unsaturated dicarboxylic acid monoester is not particularly limited, but usually an ethylenically unsaturated dicarboxylic acid having 4 to 12 carbon atoms and an alkyl monoester having 1 to 12 carbon atoms, preferably an ethylenically unsaturated dicarboxylic acid having 4 to 6 carbon atoms and an alkyl monoester having 2 to 8 carbon atoms, and more preferably, butendioic acid having 4 carbon atoms and an alkyl monoester having 2 to 6 carbon atoms can be used.

Specific examples of such ethylenic unsaturated dicarboxylic acid monoester include: butenedione acid monoalkyl ester such as monomethyl fumarate, monoethyl fumarate, mono-n-butyl fumarate, monomethyl maleate, monoethyl maleate, mono-n-butyl maleate, monocyclopentyl fumarate, monocyclohexyl fumarate, monocyclohexenyl fumarate, monocyclopentyl maleate, monocyclohexyl maleate; and itaconic acid monoalkyl ester such as monomethyl itaconate, monoethyl itaconate, mono-n-butyl itaconate, monocyclohexyl itaconate, and the like. Among these, mono-n-butyl fumarate and mono-n-butyl maleate are preferable, and mono-n-butyl fumarate is particularly preferable.

Examples of the epoxy group-containing monomer include: epoxy group-containing (meth) acrylic acid esters such as glycidyl (meth) acrylate; epoxy group-containing vinyl ethers such as allyl glycidyl ether and vinyl glycidyl ether; and the like.

Examples of the monomer having a halogen group include unsaturated alcohol ester of halogen-containing saturated carboxylic acid, (meth) acrylic acid haloalkyl ester, (meth) acrylic acid haloacyloxyalkyl ester, (meth) acrylic acid (haloacetylcarbamoyloxy) alkyl ester, halogen-containing unsaturated ether, halogen-containing unsaturated ketone, aromatic vinyl compound containing halomethyl group, unsaturated amide containing halogen, haloacetyl group-containing unsaturated monomer, and the like.

Specific examples of preferable unsaturated alcohol esters of halogen-containing saturated carboxylic acids include vinyl chloroacetate, vinyl 2-chloropropionate, allyl chloroacetate and the like.

Specific examples of the haloalkyl (meth) acrylate ester include chloromethyl (meth) acrylate, 1-chloroethyl (meth) acrylate, 2-chloroethyl (meth) acrylate, 1,2-dichloroethyl (meth) acrylate, 2-chloropropyl (meth) acrylate, 3-chloropropyl (meth) acrylate, 2,3-dichloropropyl (meth) acrylate, and the like. Examples of the haloacyloxyalkyl (meth) acrylate include 2-(chloroacetoxy) ethyl (meth) acrylate, 2-(chloroacetoxy) propyl (meth) acrylate, and 3-(chloroacetoxy) propyl (meth) acrylate, 3-(hydroxychloroacetoxy) propyl (meth) acrylate, and the like. Examples of the (meth) acrylic acid (haloacetylcarbamoyloxy) alkyl ester include 2-(chloroacetylcarbamoyloxy) ethyl (meth) acrylate and 3-(chloroacetylcarbamoyloxy) propyl (meth) acrylate, and the like.

Examples of the halogen-containing unsaturated ether include chloromethyl vinyl ether, 2-chloroethyl vinyl ether, 3-chloropropyl vinyl ether, 2-chloroethyl allyl ether, 3-chloropropyl allyl ether and the like. Examples of halogen-containing unsaturated ketones include 2-chloroethyl vinyl ketone, 3-chloropropyl vinyl ketone, 2-chloroethyl allyl ketone, and the like. Examples of the halomethyl group-containing aromatic vinyl compound include p-chloromethylstyrene, m-chloromethylstyrene, o-chloromethylstyrene, p-chloromethyl-$\alpha$-methylstyrene, and the like. Examples of the halogen-containing unsaturated amide include N-chloromethyl (meth) acrylamide and the like. Examples of the haloacetyl group-containing unsaturated monomer include 3-(hydroxychloroacetoxy) propyl allyl ether, p-vinylbenzyl chloroacetic acid ester, and the like.

These monomers containing a reactive group are used alone or in combination of two or more, and the ratio in the acrylic rubber is usually 0.01 to 20% by weight, preferably 0.1 to 10% by weight, more preferably 0.5 to 5% by weight, most preferably 1 to 3% by weight.

Monomers other than the above monomers to be used as necessary (hereinafter referred to as "other monomers") are not particularly limited as long as it can be copolymerized with the above-mentioned monomers. Examples of the other monomers include, for example, olefin-based monomer such as aromatic vinyl, ethylenically unsaturated nitrile, acrylamide monomer, and the like. Examples of the aromatic vinyl include styrene, $\alpha$-methylstyrene, divinylbenzene and the like. Examples of the ethylenically unsaturated nitrile include acrylonitrile, methacrylonitrile, and the like. Examples of the acrylamide monomer include acrylamide, methacrylamide, and the like. Examples of other olefinic monomers include ethylene, propylene, vinyl acetate, ethyl vinyl ether, butyl vinyl ether, and the like.

These other monomers may be used alone or in combination of two or more, and the ratio of the other monomers in the acrylic rubber is usually in the range of 0 to 30% by weight, preferably 0 to 20% by weight, more preferably 0 to 15% by weight, most preferably 0 to 10% by weight.

<Acrylic Rubber>

The acrylic rubber that constitutes the acrylic rubber sheet according to the present invention is characterized by having a reactive group. The content of the reactive group may be appropriately selected according to the purpose of use, but when it is usually in the range of 0.001 to 5% by weight, preferably 0.01 to 3% by weight, more preferably 0.05 to 1% by weight, particularly preferably 0.1 to 0.5% by weight as weight ratio of the reactive group itself, since processability, strength properties, compression set resistance, oil resistance, cold resistance, and water resistance are highly well-balanced.

The acrylic rubber constituting the acrylic rubber sheet of the present invention contains at least one (meth)acrylic acid ester selected from the group consisting of (meth)acrylic acid alkyl ester and (meth)acrylic acid alkoxyalkyl ester. The proportion of such (meth)acrylic acid ester-derived bonding units in the acrylic rubber is not particularly limited and is appropriately selected according to the intended purpose, but the proportion is usually 50% by weight or more, preferably 60% by weight or more, more preferably 70% by weight or more, particularly preferably 80% by weight or more, and most preferably 90% by weight or more.

Specific examples of the acrylic rubber constituting the acrylic rubber sheet of the present invention comprise at least one (meth) acrylic acid ester selected from the group consisting of (meth) acrylic acid alkyl ester and (meth) acrylic acid alkoxyalkyl ester, a reactive monomer, and other copolymerizable monomer to be included as necessary. And the ratios thereof in the acrylic rubber are as follows: the ratio of the at least one (meth) acrylic acid ester selected from the group consisting of (meth) acrylic acid alkyl ester and (meth) acrylic acid alkoxyalkyl ester is usually in the range of 50 to 99.99% by weight, preferably 70 to 99.9% by weight, more preferably 80 to 99.5% by weight, particularly preferably 87 to 99% by weight; the ratio of the reactive monomer is usually in the range of 0.01 to 20% by weight, preferably 0.1 to 10% by weight, more preferably 0.5 to 5% by weight, particularly preferably 1 to 3% by weight; and the ration of the other monomer is usually in the range of 0 to 30% by weight, preferably 0 to 20% by weight, more preferably 0 to 15% by weight, particularly preferably 0 to 10% by weight. By setting the ratios of these monomers in the acrylic rubber in the above ranges, the object of the present invention can be highly achieved, and it is preferable when the acrylic rubber sheet is a cross-linked product, since the water resistance and compression set resistance are remarkably improved.

The weight average molecular weight (Mw) of the acrylic rubber constituting the acrylic rubber sheet of the present invention is not particularly limited, but when the weight average molecular weight (Mw) of the acrylic rubber by an absolute molecular weight measured by GPC-MALS is in the range of 100,000 to 5,000,000, preferably 500,000 to 4,000,000, more preferably 700,000 to 3,000,000, most preferably 1,000,000 to 2,500,000, it is preferable, since the processability at the time of mixing the acrylic rubber bale, strength properties, and compression set resistance properties are highly well-balanced.

The ratio (Mz / Mw) of the Z-average molecular weight (Mz) with respect to the weight-average molecular weight (Mw) of the acrylic rubber constituting the acrylic rubber sheet of the present invention is not particularly limited, but when the ratio (Mz / Mw), in terms of the absolute molecular weight distribution measured by GPC-MALS focusing on the high molecular weight region, is in the range of 1.3 or more, preferably 1.4 to 5, and more preferably 1.5 to 2, it is preferable, since processability and strength property of the acrylic rubber bale are highly well-balanced, and changes of the physical properties during storage can be mitigated.

The glass transition temperature (Tg) of the acrylic rubber constituting the acrylic rubber bale according to the present invention is not particularly limited, but is usually 20°C or lower, preferably 10°C or lower, and more preferably 0°C or lower. When the glass transition temperature is the above lower limit or higher, the oil resistance and heat resistance can be more excellent, and when the glass transition temperature is the above upper limit or lower, the cold resistance and processability can be more excellent.

The content of the acrylic rubber in the acrylic rubber sheet of the present invention is appropriately selected according to the purpose of use, but is usually 90% by weight or more, preferably 95% by weight or more, more preferably 97% by weight or more, particularly 98% by weight or more. The content of the acrylic rubber in the acrylic rubber sheet of the present invention is substantially equal to the total amount of the acrylic rubber sheet minus the ash content in which the polymerization catalyst, emulsifier, coagulant, and the like used in the production cannot be completely removed.

<Acrylic Rubber Sheet>

The acrylic rubber sheet of the present invention is characterized by that it comprises the above-mentioned acrylic rubber, and it has the ash content, the amount of gel insoluble in the methyl ethyl ketone and the water content in a specific range.

The thickness of the acrylic rubber sheet of the present invention is not particularly limited, but when it is usually in the range of 1 to 40 mm, preferably 2 to 35 mm, more preferably 3 to 30 mm, and most preferably 5 to 25 mm, it is preferable, since workability, storage stability and productivity are highly well-balanced. In particular, thickness in the case that the productivity is remarkably improved to produce an inexpensive acrylic rubber sheet is usually in the range of 1 to 30 mm, preferably 2 to 25 mm, more preferably 3 to 15 mm, and particularly preferably 4 to 12 mm.

The width of the acrylic rubber sheet of the present invention is appropriately selected according to the purpose of use, but when it is usually in the range of 300 to 1,200 mm, preferably 400 to 1,000 mm, more preferably 500 to 800 mm, it is preferable, since handleability of the acrylic rubber sheet is particularly excellent.

The length of the acrylic rubber sheet is not particularly limited, but when it is it is in the range of 300 to 1,200 mm, preferably 400 to 1,000 mm, and more preferably 500 to 800 mm, it is preferable, since handleability of the acrylic rubber sheet is particularly good.

When the ash content contained in the acrylic rubber sheet of the present invention is 0.2% by weight or less, preferably 0.15% by weight or less, more preferably 0.12% by weight or less, particularly preferably 0.11% by weight or less, most preferably 0.1% by weight or less, it is preferable, since the storage stability and the water resistance of the acrylic rubber sheet are excellent.

The lower limit of the ash content of the acrylic rubber sheet of the present invention is not limited, but when it is usually 0.0001% by weight or more, preferably 0.0005% by weight or more, more preferably 0.001% by weight or more, particularly preferably 0.005% by weight or more, and most preferably 0.01% by weight or more, it is preferable, since the stickiness to the metal surface of the acrylic rubber sheet is suppressed, and the workability is excellent.

The ash content of the acrylic rubber sheet of the present invention, in which storage stability, water resistance and workability are highly well-balanced, is usually in the range of 0.0001 to 0.2% by weight, preferably 0. 0005 to 0.15% by weight, more preferably 0.001 to 0.12% by weight, particularly preferably 0.005 to 0.11% by weight, most preferably 0.01 to 0.1% by weight.

In the acrylic rubber sheet of the present invention, the content (total amount) of the at least one element selected from the group consisting of sodium, sulfur, calcium, magnesium and phosphorus in the above ash is not particularly limited, but when it is, in a ratio with respect to the total ash content, usually at least 30% by weight, preferably 50% by weight or more, more preferably 70% by weight or more, and particularly preferably 80% by weight or more, it is preferable, since storage stability and water resistance of the acrylic rubber sheet are highly excellent.

The total amount of sodium and sulfur in the ash of the acrylic rubber sheet of the present invention is not particularly limited, but when it is, in terms of a ratio with respect to the total ash content, usually 30% by weight or more, preferably 50% by weight or more, more preferably 70% by weight or more, particularly preferably 80% by weight or more, it is preferable, since storage stability and water resistance of the acrylic rubber sheet are highly excellent.

The ratio ([Na] / [S]) of sodium to sulfur in the ash of the acrylic rubber sheet of the present invention is not particularly limited, but when it is, in terms of a weight ratio, usually in the range of 0.4 to 2.5, preferably 0.6 to 1.5, more preferably 0.7 to 1, more preferably 0.75 to 0.95, most preferably 0.8 to 0.9 it is preferable, since the water resistance of the acrylic rubber sheet is highly excellent.

When the gel amount of the acrylic rubber sheet of the present invention, in terms of insoluble matter of methyl ethyl ketone, is 50% by weight or less, preferably 30% by weight or less, more preferably 20% by weight or less, particularly preferably 10% by weight or less, most preferably 5% by weight or less, it is preferable, since the processability of the acrylic rubber sheet is highly improved.

The water content of the acrylic rubber sheet of the present invention is not limited, but when it is usually less than 1% by weight, preferably 0.8% by weight or less, and more preferably 0.6% by weight or less, it is preferable, since the vulcanization (cross-linking) properties of the rubber mixture using the acrylic rubber sheet are optimized, and the properties such as heat resistance and water resistance of the product are excellent.

The specific gravity of the acrylic rubber sheet of the present invention is not limited, but when it is usually in the range of 0.7 to 1.5, preferably 0.8 to 1.4, more preferably 0.9 to 1.3, and particularly preferably 0.95 to 1.25, most preferably 1.0 to 1.2, it is preferable, since the storage stability of the acrylic rubber sheet is highly excellent.

The pH of the acrylic rubber sheet of the present invention is not particularly limited, but when it is usually in the range of 6 or less, preferably 2 to 6, more preferably 2.5 to 5.5, and particularly preferably 3 to 5, it is preferable, since the storage stability of the acrylic rubber sheet is highly improved.

The complex viscosity ($[\eta]$ 60°C) at 60°C of the acrylic rubber sheet of the present invention is not limited, but when it is usually in the range of 15,000 Pa·s or less, preferably 2,000 to 10,000 Pa·s, and more preferably 2,500 to 7,000 Pa·s, and most preferably 2,700 to 5,500 Pa·s, it is preferable, since the processability, the oil resistance, and the shape retention of the acrylic rubber sheet are excellent.

The complex viscosity ($[\eta]$ 100°C) at 100°C of the acrylic rubber sheet of the present invention is not limited, but when it is usually in the range of 1,500 to 6,000 Pa·s, preferably 2,000 to 5,000 Pa·s, more preferably 2,500 to 4,000 Pa·s, and most preferably 2,500 to 3,500 Pa·s, it is preferable, since the processability, the oil resistance and the shape retention of the acrylic rubber sheet are excellent.

The ratio ($[\eta]$ 100°C / $[\eta]$ 60°C) of the complex viscosity ($[\eta]$ 100°C) at 100°C to the complex viscosity at 60°C ($[\eta]$ 60°C) of the acrylic rubber sheet of the present invention is not limited, but it is usually 0.5 or more, preferably 0.6 or more, more preferably 0.7 or more, particularly preferably 0.8 or more, most preferably 0.83 or more. Further, when the ratio ($[\eta]$ 100°C / $[\eta]$ 60°C) of the complex viscosity ($[\eta]$ 100°C) at 100°C to the complex viscosity ($[\eta]$ 60°C) at 60°C is usually in the range of 0.5 to 0.99, preferably 0.5 to 0.98, more preferably 0.6 to 0.95, particularly preferably 0.75 to 0.93, most preferably 0.8 to 0.93, it is preferable, since the processability, the oil resistance, and the shape retention of the acrylic rubber sheet are highly well-balanced.

The Mooney viscosity (ML1+4,100°C) of the acrylic rubber sheet of the present invention is not limited, but when it is usually in the range of 10 to 150, preferably 20 to 100, and more preferably 25 to 70, it is preferable, since the processability and the strength properties of the acrylic rubber sheet are highly well-balanced.

Types of the acrylic rubber sheet of the present invention is not particularly limited, but example thereof include a blow sheet produced by a blow molding method, a cast sheet produced by a solution casting method, a melt kneading sheet produced by a melt extrusion method, and the like. Among these, the melt kneading sheet is preferable because it can maximize workability, storage stability and strength properties.

<Method for Producing the Acrylic Rubber Sheet>

Such an acrylic rubber sheet can be produced by the production method of the present invention including the processes (1) to (4) shown below. This means that the acrylic rubber sheet of the present invention can be easily produced by the production method including the following processes (1) to (4):

> (1) an emulsion polymerization process to emulsify a monomer component by water and an emulsifier, the monomer containing at least one (meth) acrylic acid ester selected from the group consisting of (meth) acrylic acid alkyl ester and (meth) acrylic acid alkoxyalkyl ester, a monomer containing a reactive group, and other copolymerizable monomer as necessary, and to emulsion-polymerize the obtained emulsified monomer component in the presence of a polymerization catalyst to obtain an emulsion polymerization liquid;
> (2) a coagulation process to generate hydrous crumbs by contacting the obtained emulsion polymerization liquid with a coagulant liquid;
> (3) a washing process to wash the generated hydrous crumbs;
> (4) a dehydration, drying, and molding process to dehydrate the washed hydrous crumbs by a dehydration barrel to a water content of 1 to 40% by weight, using a screw-type extruder provided with the dehydration barrel having a dehydration slit, a drying barrel for drying under reduced pressure, and a die at a tip end, and then to dry the dehydrated hydrous crumbs by the drying barrel to the water content of less than 1% by weight, and to extrude a sheet-shaped dry rubber from the die.

(Emulsion Polymerization Process)

The emulsion polymerization process in the method for producing an acrylic rubber sheet of the present invention is characterized by that the monomer component containing at least one (meth) acrylic acid ester selected from the group consisting of (meth) acrylic acid alkyl ester and (meth) acrylic acid alkoxyalkyl ester, a monomer containing a reactive group, and other copolymerizable monomer, is emulsified by water and an emulsifier, and the emulsified liquid is emulsion-polymerized in the presence of a polymerization catalyst to obtain an emulsion polymerization liquid.

The monomer component used is the same as those exemplified above and described as preferable ranges. The amount of the monomer component used may be appropriately selected so as to have the above composition of the acrylic rubber that constitutes the acrylic rubber sheet of the present invention.

The emulsifier used in the emulsion polymerization process is not particularly limited and may be according to a conventional method, and examples thereof include anionic emulsifier, cationic emulsifier, and nonionic emulsifier. Among these, the anionic emulsifier and the nonionic emulsifier are preferable, the anionic emulsifier is more preferable, and the sulfuric acid emulsifier is particularly preferable.

As the anionic emulsifier, those usually used can be used without particular limitation, and examples thereof include fatty acid emulsifier, sulfonic acid emulsifier, sulfosuccinic acid emulsifier, sulfuric acid emulsifier, and phosphoric acid emulsifier, and sulfuric acid-based emulsifier are preferably used.

Examples of the fatty acid emulsifier include sodium octanoate, sodium decanoate, sodium laurate, sodium myristate, sodium palmitate, sodium stearate and the like.

Examples of the sulfonic acid-based emulsifier include sodium hexane sulfonate, sodium octane sulfonate, sodium decane sulfonate, sodium toluene sulfonate, sodium cumene sulfonate, sodium octylbenzene sulfonate, sodium dodecyl benzene sulfonate, ammonium dodecyl benzene sulfonate, sodium naphthalene sulfonate, alkyl naphthalene sodium sulfonate, sodium alkyl diphenyl ether disulfonate, and the like.

Examples of the sulfosuccinic acid emulsifier include sodium dioctyl sulfosuccinate and sodium dihexyl sulfosuccinate, and the like.

The sulfuric acid emulsifier are not particularly limited and may be prepared by a conventional method, but a sulfuric acid ester salt can be preferably used. Examples of the sulfate ester salt include sodium lauryl sulfate, ammonium lauryl sulfate, sodium myristyl sulfate, sodium laureth sulfate, sodium polyoxyethylene alkyl sulfate, and sodium polyoxyethylene alkylaryl sulfate, and the like, and among these, the sodium lauryl sulfate is particularly suitable.

Examples of phosphoric acid emulsifier include sodium lauryl phosphate, potassium lauryl phosphate, sodium polyoxyalkylene alkyl ether phosphate, and the like.

Examples of the cationic emulsifier include alkyl trimethylammonium chloride, dialkylammonium chloride, benzyl ammonium chloride and the like.

The nonionic emulsifier is not particularly limited, but the examples thereof include: polyoxyalkylene fatty acid esters such as polyoxyethylene stearic acid esters; polyoxyalkylene alkyl ethers such as polyoxyethylene dodecyl ether; polyoxyalkylene alkylphenol ethers such as polyoxyethylene nonylphenyl ether; polyoxyethylene sorbitan alkyl ester. Among these, polyoxyalkylene alkyl ether and polyoxyalkylene alkylphenol ether are preferable, and polyoxyethylene alkyl ether and polyoxyethylene alkylphenol ether are more preferable.

These emulsifiers can be used alone or in combination of two or more kinds, and the amount used, with respect to 100 parts by weight of the monomer component, is usually in the range of 0.01 to 10 parts by weight, preferably 0.1 to 5 parts by weight, more preferably 1 to 3 parts by weight.

The method for mixing the monomer component, water and the emulsifier may be according to a conventional method, and examples thereof include a method of stirring the monomer, the emulsifier and water using a stirrer such as a homogenizer or a disk turbine, and the like. The amount of water used relative to 100 parts by weight of the monomer component is usually in the range of 10 to 750 parts by weight, preferably 50 to 500 parts by weight, more preferably 100 to 400 parts by weight.

The polymerization catalyst used in the emulsion polymerization is not particularly limited as long as it is usually used in emulsion polymerization, but, for example, a redox catalyst composed of a radical generator and a reducing agent can be used. Examples of the above radical generator include peroxide, azo compound, and the like, and peroxide is preferable. And, as the peroxide, an inorganic peroxide or an organic peroxide is used, and examples of the inorganic peroxide include sodium persulfate, potassium persulfate, hydrogen peroxide, ammonium persulfate and the like. Among these, potassium persulfate, hydrogen peroxide and ammonium persulfate are preferable, and potassium persulfate is particularly preferable.

The organic peroxide is not particularly limited as long as it is a known one used in emulsion polymerization. Examples of the organic peroxide include, for example, 2,2-di(4,4-di-(t-butylperoxy) cyclohexyl) propane, 1-di-(t-hexylperoxy) cyclohexane, 1,1-di-(t-butylperoxy) cyclohexane, 4,4-di-(t-butylperoxy) n-butylvalerate, 2, 2-di-(t-butylperoxy) butane, t-butyl hydroperoxide, cumene hydroperoxide, diisopropylbenzene hydroperoxide, paramenthane hydroperoxide, benzoyl peroxide, 1,1,3,3-tetraethyl butyl hydroperoxide, t-butyl cumyl peroxide, di-t-butyl peroxide, di-t-hexyl peroxide, di(2-t-butylperoxyisopropyl) benzene, dicumyl peroxide, diisobutyryl peroxide, di(3,5,5-trimethylhexanoyl) peroxide, dilauroyl peroxide, disuccinic acid peroxide, dibenzoyl peroxide, di(3-methylbenzoyl) peroxide, benzoyl (3-methylbenzoyl) peroxide, diisobutyryl peroxydicarbonate, di-n-propyl peroxydicarbonate, di(2-ethylhexyl) peroxydicarbonate, di-sec-butylperoxydicarbonate, 1,1,3,3-tetramethylbutylperoxyneodecanate, t-hexyl peroxypivalate, t-butylperoxyneodecanate, t-hexylperoxypivalate, t-butylperoxypivalate, 2,5-dimethyl-2,5-di(2-ethylhexanoylperoxy) hexane, 1,1,3,3-tetramethylbutylperoxy-2-ethylhexanate, t-hexylperoxy-2-ethylhexanate, t-butylperoxy-3,5,5-trimethylhexanate, t-hexylperoxyisopropyl monocarbonate, t-butylperoxyisopropyl monocarbonate, t-butylyloxy-2-ethylhexyl monocarbonate, 2,5-dimethyl-2,5-di(benzoylperoxy) hexane, t-butylperoxyacetate, t-hexylperoxybenzoate, t-butyl peroxybenzoate, 2,5-dimethyl-2,5-di(t-butylperoxy) hexane. Among these, diisopropylbenzene hydroperoxide, cumene hydroperoxide, paramenthane hydroperoxide, benzoyl peroxide and the like are preferable.

Examples of the azo compound include, for example, azobisisoptyronitrile, 4,4'-azobis (4-cyanovaleric acid), 2,2'-azobis [2-(2-imidazolin-2-yl) propane], 2,2'-azobis (propane-2-carboamidine), 2,2'-azobis [N-(2-carboxyethyl)-2-methylpropanamide], 2,2'-azobis {2-[1-(2-hydroxyethyl)-2-imidazoline-2-yl] propane}, 2,2'-azobis (1-imino-1-pyrrolidino-2-methylpropane) and 2,2'-azobis {2-methyl-N-[1,1-bis (hydroxymethyl)-2-hydroxyethyl] propanamide}, and the like.

These radical generators may be used alone or in combination of two or more, and the amount thereof with respect to 100 parts by weight of the monomer component is usually in the range of 0.0001 to 5 parts by weight, preferably 0.0005 to 1 part by weight, more preferably 0.001 to 0.5 part by weight.

The reducing agent can be used without limitation as long as it is used in a redox catalyst for emulsion polymerization, but in the present invention, it is particularly preferable to use at least two reducing agents. As the at least two reducing agents, for example, a combination of a metal ion compound in a reduced state and another reducing agent is preferable.

The metal ion compound in the reduced state is not particularly limited, and examples thereof include ferrous sulfate, sodium hexamethylenediamine iron tetraacetate, cuprous naphthenate, and the like, and among these, ferrous sulfate is preferable. These metal ion compounds in a reduced state can be used alone or in combination of two or more, and the amount of the metal ion component used with respect to 100 parts by weight of the monomer component is usually in the range of 0.000001 to 0.01 parts by weight, preferably 0.00001 to 0.001 parts by weight, more preferably 0.00005 to 0.0005 parts by weight.

The reducing agent other than the metal ion compound in the reduced state is not particularly limited, but examples thereof include: ascorbic acid such as ascorbic acid, sodium ascorbate, potassium ascorbate or a salt thereof; erythorbic acid such as erythorbic acid, sodium erythorbate, potassium erythorbate or a salt thereof; sulfinic acid salts such as sodium hydroxymethanesulfinate; sulfites such as sodium sulfite, potassium sulfite, sodium bisulfite, aldehyde sodium bisulfite, potassium bisulfite; pyrosulfites such as sodium pyrosulfite, potassium pyrosulfite, sodium hydrogensulfite, potassium hydrogensulfite and the like; thiosulfates such as sodium thiosulfate and potassium thiosulfate; phosphorous acid such as phosphorous acid, sodium phosphite, potassium phosphite, sodium hydrogen phosphite and potassium hydrogen phosphite, or salts thereof; pyrophosphite such as pyrophosphite, sodium pyrophosphite, potassium pyrophosphite, sodium hydrogen pyrophosphite, potassium hydrogen pyrophosphite, or a salt thereof; sodium formaldehyde sulfoxylate, and the like. Among these, ascorbic acid or a salt thereof, sodium formaldehyde sulfoxylate and the like are preferable, and ascorbic acid or a salt thereof is particularly preferable.

These reducing agents other than the metal ion compound in the reduced state can be used alone or in combination of two or more, and the amount used with respect to 100 parts by weight of the monomer component is usually in the range of 0.001 to 1 part by weight, preferably 0.005 to 0.5 part by weight, more preferably 0.01 to 0.3 part by weight.

A preferable combination of the metal ion compound in the reduced state and the other reducing agent is a combination of ferrous sulfate and ascorbic acid or a salt thereof and / or sodium formaldehyde sulfoxylate. A more preferable combination is a combination of ferrous sulfate with ascorbate and / or sodium formaldehyde sulfoxylate. The most preferable combination is a combination of ferrous sulfate and ascorbate. The amount of ferrous sulfate used with respect to 100 parts by weight of the monomer component at this time is usually in the range of 0.000001 to 0.01 parts by weight, preferably 0.00001 to 0.001 parts by weight, more preferably 0.00005 to 0.0005 parts by weight, and the amount of ascorbic acid or a salt thereof and / or sodium formaldehyde sulfoxylate used with respect to 100 parts by weight of the monomer component is usually in the range of 0.001 to 1 part by weight, preferably 0.005 to 0.5 part by weight, more preferably 0.01 to 0.3 part by weight.

The amount of water used with respect to 100 parts by weight of the monomer component in the emulsion polymerization reaction may be only the amount used for preparing the emulsion of the above monomer component, but is adjusted to be usually in the range of 10 to 1,000 parts by weight, preferably 50 to 500 parts by weight, more preferably 80 to 400 parts by weight, most preferably 100 to 300 parts by weight.

The emulsion polymerization reaction method may be a conventional method, and may be a batch method, a semi-batch method, or a continuous method. The polymerization temperature and the polymerization time are not particularly limited and can be appropriately selected depending on the type of the polymerization initiator used and the like. The polymerization temperature is usually in the range of 0 to 100°C, preferably 5 to 80°C, more preferably 10 to 50°C, and the polymerization time is usually 0.5 to 100 hours, preferably 1 to 10 hours.

The polymerization conversion rate of the emulsion polymerization reaction is not particularly limited, but the acrylic rubber sheet that is produced when the polymerization conversion rate is usually 80% by weight or more, preferably 90% by weight or more, more preferably 95% by weight or more, is preferable, is preferable since said acrylic rubber sheet it is excellent in strength properties and free of monomer odor. A polymerization terminator may be used for termination of the polymerization.

(Coagulation Process)

The coagulation process in the method for producing an acrylic rubber sheet of the present invention is characterized in that the obtained emulsion polymerization liquid is brought into contact with a coagulant liquid composed of a coagulant-containing aqueous solution to produce hydrous crumbs.

The solid content concentration of the emulsion polymerization liquid used in the coagulation process is not particularly limited, but it is usually adjusted to in the range of 5 to 50% by weight, preferably 10 to 45% by weight, more preferably 20 to 40% by weight.

The coagulant used in the coagulation process is not particularly limited, but a metal salt is usually used. Examples of the metal salt include alkali metal salts, group 2 metal salts of the periodic table, and other metal salts, and the like, preferably alkali metal salts, group 2 metal salts of the periodic table, and more preferably alkali metal salts.

Examples of the alkali metal salt include: sodium salts such as sodium chloride, sodium nitrate and sodium sulfate; potassium salts such as potassium chloride, potassium nitrate and potassium sulfate; lithium salts such as lithium chloride, lithium nitrate; and lithium sulfate. Among these, sodium salts are preferable, and sodium chloride and sodium sulfate are particularly preferable.

Examples of the group 2 metal salt of the periodic table include magnesium chloride, calcium chloride, magnesium nitrate, calcium nitrate, magnesium sulfate, calcium sulfate, and the like, preferably calcium chloride and magnesium sulfate.

Metal salts other than exemplified above include: for example, zinc chloride, titanium chloride, manganese chloride, iron chloride, cobalt chloride, nickel chloride, aluminum chloride, tin chloride, zinc nitrate, titanium nitrate, manganese nitrate, iron nitrate, cobalt nitrate, nickel nitrate, aluminum nitrate, tin nitrate, zinc sulfate, titanium sulfate, manganese sulfate, iron sulfate, cobalt sulfate, nickel sulfate, aluminum sulfate, tin sulfate, and the like.

These coagulants can be used alone or in combination of two or more, and the amount thereof is usually in the range of 0.01 to 100 parts by weight, preferably 1 to 50 parts by weight, more preferably 1 to 30 parts by weight with respect to 100 parts by weight of the monomer component. When the coagulant is in this range, it is preferable, since the compression set resistance and water resistance when the acrylic rubber sheet is cross-linked can be highly improved while the coagulation of the acrylic rubber is sufficient.

When the concentration of the coagulant in the coagulant liquid (coagulant aqueous solution) used is usually in the range of 0.1 to 20% by weight, preferably 0.5 to 15% by weight, more preferably 1 to 10% by weight, and particularly preferably 1.5 to 5% by weight, it is preferable, since the particle size of the generated hydrous crumbs can be uniformly focusing on a specific region.

The temperature of the coagulant liquid is not limited, but when it is usually in the range of 40°C or higher, preferably 40 to 90°C, and more preferably 50 to 80°C, it is preferable, since uniform hydrous crumbs are generated.

The contact of the emulsion polymerization liquid and the coagulant liquid is not particularly limited, and it can be, for example, a method of adding the emulsion polymerization liquid to the stirring coagulant liquid, or a method of adding the coagulant liquid to the stirring emulsion polymerization liquid. However, the method of adding the emulsion polymerization liquid to the stirring coagulant liquid is preferable, since it can uniformly focus the shape and crumb diameter of the hydrous crumbs to be produced, and significantly improve the washing efficiency of the emulsifier and the coagulant.

The stirred coagulant liquid is preferably vigorously stirred to some extent, and the speed of revolution (the stirring speed) is represented by the number of revolutions of the stirring blade of the stirring device provided in the coagulation tank, but it is preferable the stirring speed it is usually in the range of 100 rpm or more, preferably 200 to 1,000 rpm, more preferably 300 to 900 rpm, and particularly preferably 400 to 800 rpm. The rotation speed at which the coagulant liquid is vigorously stirred to some extent is preferable for making the particle size of the hydrous crumbs to be generated small and uniform, and by setting the rotation speed above the lower limit, it is possible to prevent the particle size of the crumb from becoming excessively large or small, while by setting the rotation speed below the upper limit, it is possible to make the coagulation reaction control easier.

The peripheral speed (flow velocity) of the coagulant liquid being stirred is expressed by the speed of the outer circumference of the stirring blade of the stirring device installed in the coagulation tank. It is preferable that the coagulant liquid is vigorously stirred to a certain extent, because the particle size of the generated hydrous crumbs can be made small and uniform, and the peripheral speed as mentioned above is usually 0.5 m/s or more, preferably 1 m/s or more, more preferably 1.5 m/s or more, particularly preferably 2 m/s or more and most preferably 2.5 m/s or more. On the other hand, although the upper limit of the peripheral speed is not limited, it is easy to control the coagulation reaction when it is usually 50 m/s or less, preferably 30 m/s or less, more preferably 25 m/s or less, and most preferably 20 m/s or less.

In the present invention, by adjusting the above-mentioned various conditions of the coagulation reaction in the coagulation process (contact method, solid content concentration of emulsion polymerization liquid, concentration and temperature of coagulant liquid, rotation speed and peripheral speed during stirring of coagulant liquid, and the like) within a specific range, it is possible to make the shape and crumb diameter of the generated hydrous crumbs uniform and focused, and to significantly improve the removal of the emulsifier and coagulant during washing and dehydration.

The hydrous crumbs generated as described above preferably satisfy the following conditions (a) to (e) when all the hydrous crumbs are sieved by the JIS sieve. The JIS sieve complies with Japanese Industrial Standards (JIS Z 8801-1).

(a) The ratio of the hydrous crumbs that do not pass through a JIS sieve having a mesh opening of 9.5 mm is 10% by weight or less,

(b) The ratio of the hydrous crumbs that pass through the JIS sieve having a mesh opening of 9.5 mm but do not pass through a JIS sieve having a mesh opening of 6.7 mm is 30% by weight or less,

(c) The ratio of the hydrous crumbs that pass through the JIS sieve having a mesh opening of 6.7 mm but do not pass through a JIS sieve having a mesh opening of 710 $\mu$m is 20% by weight or more,

(d) The ratio of the hydrous crumbs that pass through the JIS sieve having a mesh opening of 710 $\mu$m but do not pass through a JIS sieve having a mesh opening of 425 $\mu$m is 30% by weight or less, and

(e) The ratio of the hydrous crumbs that pass through the JIS sieve having a mesh opening of 425 $\mu$m is 10% by weight or less.

In the above-mentioned sieving of the generated hydrous crumbs, (a) when the proportion of the hydrous crumbs that do not pass through the JIS sieve having a mesh opening of 9.5 mm is 10% by weight or less, preferably 5% by weight or less, more preferably 1% by weight or less, it is preferable, since the washing efficiency of the emulsifier and the coagulant is remarkably improved. Further, (b) when the proportion of the hydrous crumbs that pass through the JIS sieve having a mesh opening of 9.5 mm but do not pass through the JIS sieve having a mesh opening of 6.7 mm is 30% by weight or less, preferably 20% by weight or less, more preferably 5% by weight or less, it is preferable, since the washing efficiency of the emulsifier and the coagulant can be remarkably improved. Further, (c) when the proportion of the hydrous crumbs that pass through the JIS sieve having a mesh opening of 6.7 mm but do not pass through the JIS sieve having a mesh opening of 710 $\mu$m is 20% by weight or more, preferably 40% by weight or more, more preferably 70% by weight or more, most preferably 80% by weight or more, it is preferable, since the washing efficiency of the emulsifier and the coagulant can be remarkably improved. Furthermore, (d) when the proportion of the hydrous crumbs that pass through the JIS sieve having a mesh opening of 710 $\mu$m but do not pass through the JIS sieve having a mesh opening of 425 $\mu$m is 30% by weight or less, preferably 20% by weight or less, more preferably 15% by weight or less, it is preferable, since the washing efficiency of the emulsifier and the coagulant is remarkably improved and the productivity is increased. Still further, (e) when the proportion of the small-diameter hydrous crumbs that pass through a JIS sieve having a mesh opening of 425 $\mu$m is 10% by weight or less, preferably 5% by weight or less, more preferably 1% by weight or less, it is preferable, since the washing efficiency of the emulsifier or coagulant is remarkably improved and the productivity is increased.

In the present invention, (f) when the proportion of the hydrous crumbs that pass through the JIS sieve having a mesh opening of 6.7 mm and do not pass through the JIS sieve having a mesh opening of 4.75 mm out of all the generated hydrous crumbs is usually 40% by weight or less, preferably 10% by weight or less, more preferably 5% by weight or less, it is preferable, since the washing efficiency of the emulsifier and the coagulant is improved.

In the present invention, (g) when the proportion of the hydrous crumbs that pass through the JIS sieve having a mesh opening of 4.75 mm and do not pass through the JIS sieve having a mesh opening of 710 $\mu$m out of all the generated hydrous crumbs is usually 40% by weight or more, preferably 60% by weight or more, more preferably 80% by weight or more, it is preferable, since the removal efficiency of the emulsifier and the coagulant during washing and dehydration is remarkably improved.

Further, in the present invention, (h) when the proportion of the hydrous crumbs that pass through a JIS sieve having a mesh opening of 3.35 mm and do not pass through the JIS sieve having a mesh opening of 710 $\mu$m out of all the generated hydrous crumbs is usually 20% by weight or more, preferably 40% by weight or more, more preferably Is preferably 50% by weight or more, particularly preferably 60% by weight or more, most preferably 70% by weight or more, it is preferable, since the removal efficiency of the emulsifier and the coagulant during washing and dehydration is remarkably improved.

(Washing Process)

The washing process in the method for producing an acrylic rubber sheet of the present invention is a process to wash the generated hydrous crumbs.

The washing method is not particularly limited and may be a conventional method. For example, the generated hydrous crumbs can be mixed with a large amount of water.

The amount of water used for washing is not limited, but when the amount of water per one washing with water, with respect to 100 parts by weight of the above monomer component, is usually in the range of 50 parts by weight or more, preferably 50 to 15,000 parts by weight, more preferably 100 to 10,000 parts by weight, particularly preferably 150 to 5,000 parts by weight, it is preferable, since the ash content in the acrylic rubber sheet can be effectively reduced.

The temperature of water used for cleaning is not limited, but it is preferable to use hot water because the washing efficiency improves when hot water is used. When the temperature of the hot water is usually in the range of 40°C or higher, preferably 40 to 100°C, more preferably 50 to 90°C, most preferably 60 to 80°C, the washing efficiency can be markedly increased.

By setting the temperature of the washing water above the lower limit temperature mentioned above, the emulsifier and the coagulant are released from the hydrous crumb, so that the washing efficiency is further improved.

The washing time is not limited, but it is usually in the range of 1 to 120 minutes, preferably 2 to 60 minutes, more preferably 3 to 30 minutes.

The number of washings is not limited, but is usually 1 to 10 times, preferably a plurality of times, more preferably 2 to 3 times. From the viewpoint of reducing the residual amount of the coagulant in the finally obtained acrylic rubber sheet, it is desirable that the number of times of washing is large, but as described above, the shape of the hydrous crumbs and the hydrous crumb diameter are specified. And / or the washing temperature within the above-mentioned range can significantly reduce the number of washings.

(Dehydration / Drying / Molding Process)

In the dehydration / drying / molding process in the method for producing an acrylic rubber sheet of the present invention, the washed hydrous crumbs are used in a screw-type extruder provided with a dehydration barrel having a dehydration slit, a drying barrel under reduced pressure, and a die at the tip of the screw-type extruder. The washed hydrous crumbs are dehydrated in the dehydrated barrel to a water content of 1 to 40% by weight, and then dried in a drying barrel to less than 1% by weight, and the sheet-shaped dry rubber is extruded from a die.

In the present invention, the hydrous crumbs supplied to the screw-type extruder are preferably ones in which free water is removed (drained) after washing.

Draining process

In the method for producing an acrylic rubber sheet of the present invention, after the washing process and before the dehydration / drying process, it is preferable to provide a draining process for separating the free water from the hydrous crumbs after washing with a drainer or the like, so that the dehydration efficiency can be increased.

As the drainer, a known drainer can be used without limitation, and examples thereof include a wire mesh, a screen, an electric sifter, and the like, and the wire mesh and the screen are preferably used.

The mesh opening of the drainer is not limited, but when it is usually in the range of 0.01 to 5 mm, preferably 0.1 to 1 mm, more preferably 0.2 to 0.6 mm, it is preferable, since the loss of hydrous crumbs is small and water can be efficiently drained.

The water content of the hydrous crumb after draining, that is, the water content of the hydrous crumbs added to the dehydration / drying process is not limited, but is usually in the range of 50 to 80% by weight, preferably 50 to 70% by weight, more preferably 50 to 60% by weight.

The temperature of the hydrous crumbs after draining, that is, the temperature of the hydrous crumbs to be added to the dehydration / drying process is not limited, but when it is usually in the range of 40°C or higher, preferably 40 to 100°C, more preferably 50 to 90°C, and particularly preferably 55 to 85°C, most preferably 60 to 80°C, it is preferable, since the hydrous crumbs can be efficiently dehydrated and dried by using a screw-type extruder, even though the hydrous crumbs have a high specific heat of 1.5 to 2.5 KJ/kg·K like the acrylic rubber constituting the acrylic rubber sheet of the present invention and it is difficult to raise the temperature.

Dehydration of Hydrous Crumbs (Dehydration Barrel)

Dehydration of hydrous crumbs is performed in a dehydration barrel with a dehydration slit provided in a screw-type extruder. The mesh opening of the dehydration slit may be appropriately selected according to the use conditions, but when it is usually in the range of 0.01 to 5 mm, preferably 0.1 to 1 mm, and more preferably 0.2 to 0.6 mm, it is preferable, since the loss of the hydrous crumbs is small and the dehydration of the hydrous crumbs is efficient.

The number of dehydration barrels in the screw-type extruder is not limited, but when the number is usually plural, preferably 2 to 10, more preferably 3 to 6, it is preferable to efficiently dehydrate the sticky acrylic rubber.

There are two types of removal of water from the hydrous crumb in the dehydration barrel: liquid removal from the dehydration slit (drainage) and steam removal (exhaust steam). In the present invention, drainage is defined as dehydration, and exhaust steam is defined as preliminary drying, so that the two methods are distinguished.

When using a screw-type extruder provided with multiple dehydration barrels, it is preferable to combine drainage and exhaust steam to efficiently dehydrate the sticky acrylic rubber. The dehydration of squeezing out water from the hydrous crumbs means dehydration by the above-mentioned drainage (dehydration by a drainage-type dehydration barrel described later).

In a screw-type extruder provided with three or more dehydration barrels, the dehydration barrels to be used as the drainage-type dehydration barrels and the dehydration barrels to be used as the exhaust-steam-type dehydration barrels may be selected according to the purpose of use. However, when the ash content in the acrylic rubber sheet usually produced is to be reduced, more drainage-type dehydration barrels should be selected, while when the water content is to be decreased, more exhaust-steam-type dehydration barrels should be selected.

The set temperature of the dehydration barrel is appropriately selected depending on the monomer composition, the ash content, the water content of the acrylic rubber, the operating conditions, and the like, but is usually in the range of 60 to 150°C, preferably 70 to 140°C, more preferably 80 to 130°C. The set temperature of the drainage-type dehydration barrel for dehydration in the drainage state is usually 60 to 120°C, preferably 70 to 110°C, more preferably 80 to 100°C. The set temperature of the exhaust-steam-type dehydration barrel for dehydrating in the steam exhausting state is usually in the range of 100 to 150°C, preferably 105 to 140°C, more preferably 110 to 130°C.

The water content after dehydration (drainage) in the drainage-type dehydration barrel for squeezing water from the hydrous crumbs is not limited, but when it is usually in the range of 1 to 40% by weight, preferably 5 to 40% by weight, more preferably 5 to 35% by weight, particularly preferably 10 to 35% by weight, most preferably 15 to 35% by weight, it is preferable, since productivity and ash removal efficiency are highly well-balanced.

When the sticky acrylic rubber having a reactive group is dehydrated by using a centrifuge or the like, the acrylic rubber adheres to the dehydration slit portion and hardly dehydrates, and the water content is reduced only to about 45 to 55% by weight. However, in the present invention, the water content can be reduced to the above range by using a screw-type extruder having a dehydration slit and forcibly squeezed by a screw.

When the dehydration barrel portion is provided with a drainage-type dehydration barrel and an exhaust-steam-type dehydration barrel, the water content of the hydrous crumbs after dehydration in the drainage-type dehydration barrel portion is usually 5 to 40% by weight, preferably 10 to 40% by weight, more preferably 15 to 35% by weight, and the water content after preliminary drying in the exhaust-steam-type dehydration barrel is usually 1 to 30% by weight, preferably 3 to 20% by weight, more preferably 5 to 15% by weight.

By setting the crumb water content after the dehydration process to the above-mentioned lower limit or more, the dehydration time can be shortened so that the deterioration of the acrylic rubber can be suppressed, and by setting it to the above-mentioned upper limit or less, the ash content can be sufficiently reduced.

Drying Hydrous Crumbs (Drying Barrel)

Drying the hydrous crumbs after dehydration is characterized by that it is performed in the drying barrel section under reduced pressure. The degree of decompression of the drying barrel may be appropriately selected, but when it is usually in the range of 1 to 50 kPa, preferably 2 to 30 kPa, and more preferably 3 to 20 kPa, it is preferable, since the hydrous crumbs can be efficiently dried.

The set temperature of the drying barrel may be appropriately selected, but when the temperature is usually in the range of 100 to 250°C, preferably 110 to 200°C, more preferably 120 to 180°C, there is no burning or deterioration of the acrylic rubber. It is preferable because the hydrous crumbs can be efficiently dried, so that the amount of gel insoluble in the methyl ethyl ketone in the acrylic rubber sheet can be reduced.

The number of drying barrels in the screw-type extruder is not limited, but is usually plural, preferably 2 to 10, more preferably 3 to 8. The degree of pressure reduction in the case of having a plurality of drying barrels may be such that all the drying barrels have similar degree of pressure reduction, or the degree of pressure reduction may be changed for each barrel. The set temperature in the case of having a plurality of drying barrels may be such that all the drying barrels have similar temperature, or the temperature may be changed for each barrel, but when the temperature of a discharge portion (closer to the die) is higher than the temperature of an introduction portion (closer to the dehydration barrel), it is preferable, since the drying efficiency is increased.

The water content of the dry rubber after drying is usually less than 1% by weight, preferably 0.8% by weight or less, and more preferably 0.6% by weight or less. In the present invention, it is preferable that the dry rubber is melt-extruded in such a manner that the water content of the dry rubber becomes this value (a state in which most of the water is removed) particularly in the screw-type extruder, thereby to reduce the amount of gel insoluble in the methyl ethyl ketone of the acrylic rubber sheet.

Dry Rubber (Die Portion)

The dry rubber dehydrated and dried by a screw portion of the dehydration barrel and the drying barrel is sent to a screwless rectifying die portion provided near the tip of the screw-type extruder. A breaker plate or a wire net may or may not be provided between the screw portion and the die portion.

The dry rubber extruded from the die portion of the screw-type extruder is preferable, because the dry rubber is extruded into a sheet shape by the die having a shape of substantially rectangular, thereby to obtain the dry rubber with less air entrapment, large specific gravity, and excellent storage stability.

The resin pressure in the die portion is not particularly limited, but when the resin pressure is usually in the range of 0.1 to 10 MPa, preferably 0.5 to 5 MPa, more preferably 1 to 3 MPa, it is preferable, since air entrapment is small (specific gravity increases), and the productivity is excellent.

Screw-Type Extruder and Operating Conditions

The screw length (L) of the screw-type extruder used may be appropriately selected depending on the purpose of use, but it is usually in the range of 3,000 to 15,000 mm, preferably 4,000 to 10,000 mm, more preferably 4,500 to 8,000 mm. The screw diameter (D) of the screw-type extruder may be appropriately selected according to the purpose of use, but it is usually in the range of 50 to 250 mm, preferably 100 to 200 mm, more preferably 120 to 160 mm.

The ratio (L / D) of the screw length (L) and the screw diameter (D) of the screw-type extruder used is not limited, but when it is usually in the range of 10 to 100, preferably 20 to 80, more preferably 30 to 60, it is preferable, since the water content can be made less than 1% by weight without lowering the molecular weight of the dry rubber or causing burns.

The rotation speed (N) of the screw-type extruder used may be appropriately selected according to various conditions, but when it is usually in the range of 10 to 1,000 rpm, preferably 50 to 750 rpm, more preferably 100 to 500 rpm, and most preferably 120 to 300 rpm, it is preferable, since the water content and gel amount of the acrylic rubber can be efficiently reduced.

The extrusion rate (Q) of the screw-type extruder used is not limited, when it is usually in the range of 100 to 1,500 kg/hr, preferably 300 to 1,200 kg/hr, more preferably 400 to 1,000 kg/hr, most preferably 500 to 800 kg/hr.

The ratio (Q / N) of the extrusion rate (Q) and the number of revolutions (N) of the screw-type extruder used is not limited, but when it is usually in the range of 2 to 10, preferably 3 to 8, and more preferably 4 to 6, it is preferable, since the quality including strength properties and the production productivity of the acrylic rubber sheet are highly well-balanced.

Sheet-Shaped Dry Rubber

The shape of the dry rubber extruded from the screw-type extruder is preferably a sheet shape. With this shape, since the specific gravity can be increased without entrapping air during extrusion, so that the storage stability is highly improved, which is preferable. The sheet-shaped dry rubber extruded from the screw-type extruder is usually cut after cooling and used as an acrylic rubber sheet.

The thickness of the sheet-shaped dry rubber extruded from the screw-type extruder is not particularly limited, but when it is usually in the range of 1 to 40 mm, preferably 2 to 35 mm, more preferably 3 to 30 mm, and most preferably 5 to 25 mm, it is preferable, since the sheet-shaped dry rubber has excellent workability and productivity. In particular, since the thermal conductivity of the sheet-shaped dry rubber is as low as 0.15 to 0.35 W/mK, in order to increase the cooling efficiency and to improve the productivity remarkably, the thickness of the sheet-shaped dry rubber is usually in the range of 1 to 30 mm, preferably 2 to 25 mm, more preferably 3 to 15 mm, and particularly preferably 4 to 12 mm.

The width of the sheet-shaped dry rubber extruded from the screw-type extruder is appropriately selected according to the purpose of use, but it is usually in the range of 300 to 1,200 mm, preferably 400 to 1,000 mm, more preferably 500 to 800 mm. The temperature of the dry rubber extruded from the screw-type extruder is not limited, but it is usually in the range of 100 to 200°C, preferably 110 to 180°C, more preferably 120 to 160°C.

The water content of the dry rubber extruded from the screw-type extruder is less than 1% by weight, preferably 0.8% by weight or less, more preferably 0.6% by weight or less.

The complex viscosity ([η] 100°C) at 100°C of the sheet-shaped dry rubber extruded from the screw-type extruder is not limited, but when it is usually in the range of 1,500 to 6,000 Pa·s, preferably 2,000 to 5,000 Pa·s, more preferably 2,500 to 4,000 Pa·s, and most preferably 2,500 to 3,500 Pa·s, it is preferable, since the extrudability and shape retention as a sheet are highly well-balanced. This means that, when the above-mentioned value is higher than the lower limit or higher, the extrudability can be more excellent, and when the value is lower than the upper limit or lower, collapse and breakage of the shape of the sheet-shaped dry rubber can be suppressed.

The sheet-shaped dry rubber extruded from the screw-type extruder can be folded and used as it is, but it is preferable to cut and use it.

A cutting method of the sheet-shaped dry rubber is not limited, but since the acrylic rubber of the acrylic rubber sheet according to the present invention has strong stickiness, it is preferable that the sheet-shaped dry rubber is cut after cooling the same in order to continuously cut without entrapping air.

The cutting temperature of the sheet-shaped dry rubber is not limited, but when the temperature is usually 60°C or lower, preferably 55°C or lower, more preferably 50°C or lower, it is preferable, since the cutting property and the productivity are highly well-balanced.

The complex viscosity ($[\eta]$ 60°C) at 60°C of the sheet-shaped dry rubber is not limited, but when it is usually in the range of 15,000 Pa·s or less, preferably 2,000 to 10,000 Pa·s, more preferably 2,500 to 7,000 Pa·s, and most preferably 2,700 to 5,500 Pa·s, it is preferable, since the cutting can be done continuously without entrapping air.

The ratio ($[\eta]$ 100°C / $[\eta]$ 60°C) of the complex viscosity ($[\eta]$ 100°C) at 100°C to the complex viscosity ($[\eta]$ 60°C) at 60°C of the sheet-shaped dry rubber is not particularly limited, but when it is usually in the range of 0.5 or more, preferably 0.5 to 0.98, more preferably 0.6 to 0.95, most preferably 0.75 to 0.93, it is preferable, since air entrapment at the time of cutting is low, and cutting and productivity are highly well-balanced.

The method for cooling the sheet-shaped dry rubber is not particularly limited and the sheet-shaped dry rubber may be cooled by leaving it at room temperature. However, since the sheet-shaped dry rubber has a very low thermal conductivity of 0.15 to 0.35 W/mK, forced cooling such as an air-cooling method under ventilation or cooling, a water-spraying method for spraying water, or a dipping method for immersing in water is preferable for improving productivity, and the air cooling method under ventilation or cooling by air is particularly preferable.

By the air-cooling method for sheet-shaped dry rubber, for example, the sheet-shaped dry rubber can be extruded from a screw-type extruder onto a conveyor such as a belt conveyor and conveyed while being cooled by blowing cold air, so that the sheet-shaped dry rubber can be cooled. The temperature of the cold air is not limited, but is usually in the range of 0 to 25°C, preferably 5 to 25°C, more preferably 10 to 20°C. The length to be cooled is not limited, but it is usually 5 to 500 m, preferably 10 to 200 m, more preferably 20 to 100 m. Although the cooling rate of the sheet-shaped dry rubber is not limited, when it is usually in the range of 50°C/hr or higher, more preferably 100°C/hr or higher, more preferably 150°C/hr or higher, it is preferable, since it is particularly easy to cut.

The cutting length of the sheet-shaped dry rubber may be appropriately selected according to the usage purpose thereof, but it is usually in the range of 100 to 800 mm, preferably 200 to 500 mm, more preferably 250 to 450 mm.

The acrylic rubber sheet thus obtained is excellent in the operability and the storage stability compared with the crumb-shaped acrylic rubber, and can be used as it is or can be laminated and used as a bale.

<Acrylic Rubber Bale>

The acrylic rubber bale of the present invention is characterized by that it is obtained by laminating the above-mentioned acrylic rubber sheets. The number of laminated layers of the acrylic rubber sheet is appropriately selected in accordance with the size and the weight of the acrylic rubber bale.

The size of the acrylic rubber bale of the present invention is not particularly limited, but the width thereof is usually in the range of 100 to 800 mm, preferably 200 to 500 mm, more preferably 250 to 450 mm, the length there of is usually in the range of 300 to 1,200 mm, preferably 400 to 1,000 mm, more preferably 500 to 800 mm, and the height thereof is usually in the range of 50 to 500 mm, preferably 100 to 300 mm, more preferably 150 to 250 mm.

The reactive group content, the water content, the ash content, the component content and the ratio in the ash, the specific gravity, the gel amount, the pH, the complex viscosity ($[\eta]$ 60°C) at 60°C, the complex viscosity ($[\eta]$ 100°C) at 100°C, the ratio($[\eta]$ 100°C / $[\eta]$ 60°C) of the complex viscosity ($[\eta]$ 100°C) at 100°C to the complex viscosity ($[\eta]$ 60°C) at 60°C and the Mooney viscosity (ML1+4,100°C) of the acrylic rubber bale of the present invention are the same as those property values of the acrylic rubber sheet.

The method for producing the acrylic rubber bale of the present invention is not limited, but the acrylic rubber bale can be easily produced by cooling the sheet-shaped dry rubber extruded from the above-mentioned screw-type extruder, cutting the cooled dry rubber, and then laminating and integrating the cut dry rubber.

When the lamination temperature of the sheet-shaped dry rubber is usually 30°C or higher, preferably 35°C or higher, and more preferably 40°C or higher, it is preferable, since air entrapped during lamination can be released. The number of laminated layers may be appropriately selected according to the size or weight of the acrylic rubber bale. The acrylic rubber bale of the present invention is integrated by its own weight after laminating sheet-shaped dry rubber.

The acrylic rubber bale of the present invention thus obtained is excellent in the operability as compared with crumb-shaped acrylic rubber, and is excellent in the water resistance, the strength properties and the processability, and the acrylic rubber bale can be used by putting into a mixer such as a Banbury mixer or a roll as it is or after being cut into a required amount.

<Rubber Mixture>

The rubber mixture according to the present invention is characterized by that it is produced by mixing the above-mentioned acrylic rubber sheet or the above-mentioned acrylic rubber bale with a filler and a cross-linking agent.

The filler contained in the rubber mixture is not limited, but examples thereof include a reinforcing filler and a non-reinforcing filler, and the reinforcing filler is preferable.

Examples of the reinforcing filler include: carbon black such as furnace black, acetylene black, thermal black, channel black and graphite; silica such as wet silica, dry silica and colloidal silica; and the like. Examples of non-reinforcing fillers include quartz powder, diatomaceous earth, zinc oxide, basic magnesium carbonate, activated calcium carbonate, magnesium silicate, aluminum silicate, titanium dioxide, talc, aluminum sulfate, calcium sulfate, barium sulfate, and the like.

These fillers can be used alone or in combination of two or more, and the compounding amount thereof, which is not particularly limited, is usually in the range of 1 to 200 parts by weight, preferably 10 to 150 parts by weight, more preferably 20 to 100 parts by weight, with respect to 100 parts by weight of the acrylic rubber sheet or the acrylic rubber bale.

The cross-linking agent may be appropriately selected depending on the type and application of the reactive group contained in the acrylic rubber constituting the acrylic rubber sheet or the acrylic rubber bale, and it is not particularly limited as long as it can cross-link the acrylic rubber sheet or the acrylic rubber bale. Conventionally known cross-linking agents such as, for example, polyvalent amine compounds such as diamine compounds and carbonates thereof; sulfur compounds; sulfur donors; triazine thiol compounds; polyvalent epoxy compounds; organic carboxylic acid ammonium salts; organic peroxides; polyvalent carboxylic acids; a quaternary onium salt; an imidazole compound; an isocyanuric acid compound; an organic peroxide; a triazine compound; and the like can be used. Among these, polyvalent amine compounds, carboxylic acid ammonium salts, dithiocarbamic acid metal salts and triazine thiol compounds are preferable, and hexamethylenediamine carbamate, 2,2'-bis [4-(4-aminophenoxy) phenyl] propane, ammonium benzoate and 2,4,6-trimercapto-1,3,5-triazine are particularly preferable.

When the acrylic rubber sheet or the acrylic rubber bale to be used includes a carboxyl group-containing acrylic rubber, it is preferable to use a polyvalent amine compound and its carbonate as a cross-linking agent. Examples of the polyvalent amine compound include: aliphatic polyvalent amine compounds such as hexamethylenediamine, hexamethylenediamine carbamate and N,N'-dicinnamylidene-1,6-hexanediamine; aromatic polyvalent amine compound such as 4,4'-methylenedianiline, p-phenylenediamine, m-phenylenediamine, 4,4'-diaminodiphenyl ether, 3,4'-diaminodiphenyl ether, 4,4'-(m-phenylenediisopropylidene) dianiline, 4,4'-(p-phenylenediisopropylidene) dianiline, 2,2'-bis [4-(4-aminophenoxy) phenyl] propane, 4,4'-diaminobenzanilide, 4,4'-bis (4-aminophenoxy) biphenyl, m- xylylenediamine, p-xylylenediamine, 1,3,5-benzenetriamine, and the like; and the like. Among these, hexamethylenediamine carbamate, 2,2'-bis [4-(4-aminophenoxy) phenyl] propane, and the like are preferable.

When the acrylic rubber sheet or the acrylic rubber bale to be used is constituted by an epoxy group-containing acrylic rubber, examples of cross-linking agent include: an aliphatic polyvalent amine compound such as hexamethylenediamine or hexamethylenediamine carbamate, and a carbonate thereof; aromatic polyvalent amine compound such as 4,4'-methylenedianiline; carboxylic acid ammonium salts such as ammonium benzoate and ammonium adipate; metal salts of dithiocarbamic acid such as zinc dimethyldithiocarbamate; polycarboxylic acids such as tetradecanedioic acid; quaternary onium salts such as cetyltrimethylammonium bromide; an imidazole compound such as 2-methylimidazole; isocyanuric acid compounds such as ammonium isocyanurate; and the like. Among these, carboxylic acid ammonium salts and metal salts of dithiocarbamic acid are preferable, and ammonium benzoate is more preferable.

When the acrylic rubber sheet or the acrylic rubber bale to be used is constituted by a halogen atom-containing acrylic rubber, it is preferable to use sulfur, a sulfur donor, or a triazine thiol compound as the cross-linking agent. Examples of the sulfur donor include dipentamethylene thiuram hexasulfide, triethyl thiuram disulfide and the like. Examples of the triazine compound include 6-trimercapto-s-triazine, 2-anilino-4,6-dithiol-s-triazine, 1-dibutylamino-3,5-dimercaptotriazine, 2-dibutylamino-4, 6-dithiol-s-triazine, 1-phenylamino-3,5-dimercaptotriazine, 2,4,6-trimercapto-1,3,5-triazine, 1-hexylamino-3,5-dimercaptotriazine, and the like. Among these, 2,4,6-trimercapto-1,3,5-triazine is preferable.

These cross-linking agents may be used alone or in combination of two or more, and the compounding amount thereof with respect to 100 parts by weight of the acrylic rubber sheet or the acrylic rubber bale is usually in the range of 0.001 to 20 parts by weight, preferably 0.1 to 10 parts by weight, more preferably 0.1 to 5 parts by weight. By setting the compounding amount of the cross-linking agent to be in this range, it is possible to make the rubber elasticity sufficient while making the mechanical strength as the rubber cross-linked product excellent, which is preferable.

The rubber mixture according to the present invention may contain other rubber components than the above-mentioned acrylic rubber sheet or the above-mentioned acrylic rubber bale, if necessary, in addition to the above-mentioned components.

The other rubber component used as necessary is not particularly limited, and examples thereof include natural rubber, polybutadiene rubber, polyisoprene rubber, styrene-butadiene rubber, acrylonitrile-butadiene rubber, silicone rubber, fluororubber, olefin elastomers, styrene elastomers, vinyl chloride elastomers, polyester elastomers, polyamide elastomers, polyurethane elastomers and polysiloxane elastomers. The shape of the other rubber component is not particularly limited, and may be, for example, a crumb shape, a sheet shape, or a bale shape.

These other rubber components may be used alone or in combination of two or more. In the rubber mixture of the present invention, the amount of these other rubber components to be used is appropriately selected within a range that does not degrade the effects according to the present invention.

The rubber mixture according to the present invention may contain an anti-aging agent, if necessary. The anti-aging agent is not particularly limited, but examples thereof include: phenolic anti-aging agents such as 2,6-di-t-butyl-4-methylphenol, 2,6-di-t-butylphenol, butylhydroxyanisole, 2,6-di-t-butyl-$\alpha$-dimethylamino-p-cresol, octadecyl-3-(3,5-di-t-butyl-4-hydroxyphenyl) propionate, styrenated phenol, 2,2'-methylene-bis (6-$\alpha$-methyl-benzyl-p-cresol), 4,4'-methylenebis (2,6-di-t-butylphenol), 2,2'-methylene-bis (4-methyl-6-t-butylphenol), 2,4-bis [(octylthio) methyl]-6-methylphenol, 2,2'-thiobis-(4-methyl-6-t-butylphenol), 4,4'-thiobis-(6-t-butyl-o-cresol), 2,6-di-t-butyl-4-(4,6-bis (octylthio)-1,3,5-triazin-2-ylamino) phenol; phosphite type antiaging agents such as tris (nonylphenyl) phosphite, diphenylisodecylphosphite, tetraphenyldipropyleneglycol diphosphite; sulfur ester-based anti-aging agents such as dilauryl thiodipropionate; amine-based anti-aging agents such as phenyl-$\alpha$-naphthylamine, phenyl-$\beta$-naphthylamine, p-(p-toluenesulfonylamide)-diphenylamine, 4,4'-($\alpha,\alpha$-dimethylbenzyl) diphenylamine, N,N-diphenyl-p-phenylenediamine, N-isopropyl-N'-phenyl-p-phenylenediamine and butyraldehyde-aniline condensates; imidazole anti-aging agents such as 2-mercaptobenzimidazole; quinoline anti-aging agents such as 6-ethoxy-2,2,4-trimethyl-1,2-dihydroquinoline; hydroquinone anti-aging agents such as 2,5-di-(t-amyl) hydroquinone; and the like. Among these, amine-based anti-aging agents are particularly preferable.

These anti-aging agents can be used alone or in combination of two or more, and the compounding amount thereof with respect to 100 parts by weight of the acrylic rubber sheet or the acrylic rubber bale is in the range of 0.01 to 15 parts by weight, preferably 0.1 to 10 parts by weight, more preferably 1 to 5 parts by weight.

The rubber mixture according to the present invention contains the above-mentioned acrylic rubber sheet or the above-mentioned acrylic rubber bale according to the present invention, a filler, a cross-linking agent, and, if necessary, other rubber components and an anti-aging agent. The rubber mixture according to the present invention may further optionally contain other additives, if necessary, commonly used in the art, for example, a cross-linking aid, a cross-linking accelerator, a cross-linking retarder, a silane coupling agent, a plasticizer, a processing aid, lubricants, pigments, colorants, antistatic agents, foaming agents and the like. These other compounding agents may be used alone or in combination of two or more, and the compounding amount thereof is appropriately selected within a range that does not degrade the effects of the present invention.

<Method for Producing Rubber Mixture>

Examples of the method for producing the rubber mixture according to the present invention include a method of mixing the acrylic rubber sheet or the acrylic rubber bale according to the present invention with the above-mentioned filler, the cross-linking agent, and, if necessary, the above-mentioned other compounding agents. For mixing, any means conventionally used in the field of rubber processing, such as an open roll, a Banbury mixer, various kneaders, and the like can be used. This means that the acrylic rubber sheet or the acrylic rubber bale, the above-mentioned filler, the cross-linking agent, and the like can be directly mixed, preferably directly kneaded, by using these mixers, so that a target rubber mixture can be obtained.

In that case, the acrylic rubber sheet or the acrylic rubber bale may be used as it is, or may be used after being divided (cut or the like) in advance.

The above-mentioned mixing procedure of each component is not particularly limited, but for example, a two-stage mixing is preferable, in which components that are difficult to react or decompose with heat are sufficiently mixed, and then thereafter, a cross-linking agent, which is a component that easily reacts or decomposes with heat, and the like are mixed for a short at a temperature that reaction and decomposition does not occur. To be specific, it is preferable to mix the acrylic rubber sheet or the acrylic rubber bale and the filler in the first stage and then mix the cross-linking agent in the second stage. The other rubber components and the antiaging agent are usually mixed in the first stage, the cross-linking accelerator is mixed in the second stage, and the combination of the other compounding agents may be appropriately selected.

The Mooney viscosity (ML1+4,100°C; compound Mooney) of the rubber mixture according to the present invention thus obtained is not limited, but is usually in the range of 10 to 150, preferably 20 to 100, more preferably 25 to 80.

<Rubber Cross-linked Product>

The rubber cross-linked product according to the present invention is obtained by cross-linking the above rubber mixture. The rubber cross-linked product according to the present invention can be produced by molding the rubber mixture according to the present invention by a molding machine applicable for a desired shape, for example, an extruder, an injection molding machine, a compressor or a roll, occurring a cross-linking reaction by heating, and fixing the shape as a rubber cross-linked product. In this case, the molding may be performed in advance and then cross-linked, or the molding and the cross-linking may be performed simultaneously.

The molding temperature of the rubber mixture is usually 10 to 200°C, preferably 25 to 150°C. The cross-linking temperature is usually 100 to 250°C, preferably 130 to 220°C, more preferably 150 to 200°C. The cross-linking time is usually 0.1 minutes to 10 hours, preferably 1 minute to 5 hours. As a heating method, a method usually used for cross-linking rubber such as press heating, steam heating, oven heating, and hot air heating may be appropriately selected.

The rubber cross-linked product according to the present invention may be further heated for secondary cross-linking depending on the shape and size of the rubber cross-linked product. The secondary cross-linking varies depending on the heating method, the cross-linking temperature, the shape, and the like, but the secondary cross-linking is preferably performed for 1 to 48 hours. The heating method and heating temperature may be appropriately selected.

The rubber cross-linked product according to the present invention has excellent water resistance, while maintaining basic properties of rubber such as tensile strength, elongation and hardness.

Taking advantage of the above-mentioned excellent properties, a rubber cross-linked product according to the present invention is preferably used as: for example, sealing materials such as an O-ring, a packing, a diaphragm, an oil seal, a shaft seal, a bearing seal, a mechanical seal, a well head seal, an electric / electronic device seal, an air compression device; various kinds of gaskets such as a rocker cover gasket mounted on a connecting portion between a cylinder block and a cylinder head, an oil pan gasket mounted on a connecting portion between an oil pan and a cylinder head or a transmission case, a gasket for a fuel cell separator mounted between a pair of housings sandwiching a unit cell including a positive electrode, an electrolyte plate and a negative electrode, a gasket for hard disk drive top covers; cushioning materials, anti-vibration materials; electric wire coating materials; industrial belts; tubes and hoses; sheets; and the like.

The rubber cross-linked product according to the present invention is also used as an extrusion-molded product and mold cross-linked product used for automobiles, for example, fuel oil system hoses for fuel tank such as a fuel hose, a filler neck hose, a vent hose, a vapor hose, an oil hose, and the like; air system hoses such as a turbo air hose, a mission control hose, and the like; various hoses such as a radiator hose, a heater hose, a brake hose, an air conditioner hose, and the like.

<Device Configuration used for production of acrylic rubber sheet>

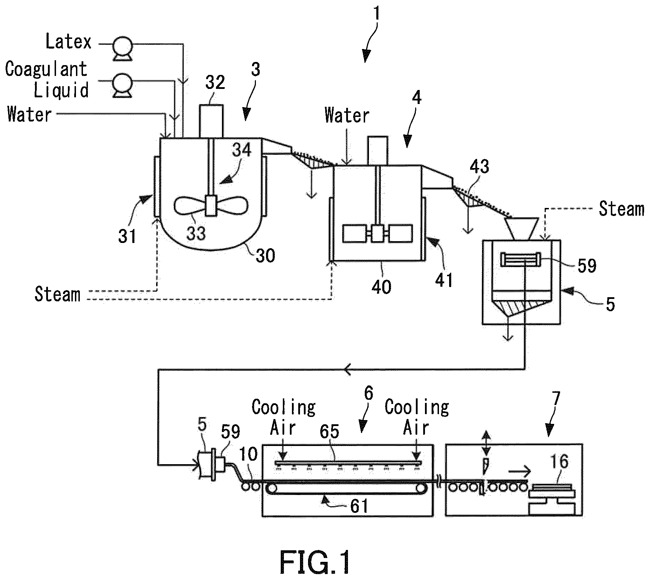

Next, a device configuration used for manufacturing the acrylic rubber sheet according to one embodiment of the present invention will be described. FIG. 1 is a diagram schematically showing an example of an acrylic rubber production system having a device configuration used for producing an acrylic rubber sheet according to one embodiment of the present invention. For producing the acrylic rubber sheet according to the present invention, for example, the acrylic rubber production system 1 shown in FIG. 1 can be used.

The acrylic rubber production system 1 shown in FIG. 1 is composed of an emulsion polymerization reactor (not shown), a coagulation device 3, a washing device 4, a drainer 43, a screw-type extruder 5, a cooling device 6, and a baling device 7.

The emulsion polymerization reactor is configured to perform the above-mentioned emulsion polymerization process. Although not shown in FIG. 1, this emulsion polymerization reactor has, for example, a polymerization reaction tank, a temperature control unit for controlling a reaction temperature, and a stirring device provided with a motor and a stirring blade. In the emulsion polymerization reactor, water and an emulsifier are mixed with a monomer component for forming an acrylic rubber, and the mixture is emulsified while being appropriately stirred by a stirrer, and emulsion polymerization is performed in the presence of a polymerization catalyst, thereby to obtain emulsion polymerization liquid. The emulsion polymerization reactor may be a batch type, a semi-batch type or a continuous type, and may be a tank-type reactor or a tube-type reactor.

The coagulation device 3 shown in FIG. 1 is configured to perform the process related to the coagulation process described above. As schematically shown in FIG. 1, the coagulation device 3 includes, for example, a stirring tank 30, a heating unit 31 that heats the inside of the stirring tank 30, a temperature control unit (not shown) that controls the temperature inside the stirring tank 30, a stirring device 34 having a motor 32 and a stirring blade 33, and a drive control unit (not shown) that controls the rotation number and rotation speed of the stirring blade 33. In the coagulation device 3, hydrous crumbs can be produced by bringing the emulsion polymerization liquid obtained in the emulsion polymerization reactor into contact with a coagulant liquid to coagulate the emulsion polymerization liquid.

In the coagulation device 3, for example, the contact between the emulsion polymerization liquid and the coagulant liquid is performed by adding the emulsion polymerization liquid to the stirred coagulant liquid. This means that the stirring tank 30 of the coagulation device 3 is filled with the coagulant liquid, and the emulsion polymerization liquid is added to and brought into contact with the coagulant liquid to coagulate the emulsion polymerization liquid, thereby generating a hydrous crumb.

The heating unit 31 of the coagulation device 3 is configured to heat the coagulant liquid with which the stirring tank 30 is filled. Further, the temperature control unit of the coagulation device 3 is configured to control the temperature inside the stirring tank 30 by controlling the heating operation by the heating unit 31 while monitoring the temperature inside the stirring tank 30 measured by a thermometer. The temperature of the coagulant liquid in the stirring tank 30 is controlled by the temperature control unit to be usually in the range of 40°C or higher, preferably 40 to 90°C, more preferably 50 to 80°C.

The stirring device 34 of the coagulation device 3 is configured to stir the coagulant liquid filled in the stirring tank 30. Specifically, the stirring device 34 includes a motor 32 that generates rotational power, and a stirring blade 33 that extends in a direction perpendicular to the rotation axis of the motor 32. The stirring blade 33 rotates about the rotation axis by the rotational power of the motor 32 in the coagulant liquid filled in the stirring tank 30 to flow the coagulant liquid. The shape and size of the stirring blade 33, the number of installations, and the like are not particularly limited.

The drive control unit of the coagulation device 3 is configured to control the rotational drive of the motor 32 of the stirring device 34 and set the rotation speed of the stirring blades 33 of the stirring device 34 to predetermined values. The stirring speed of the stirring blade 33 is controlled by the drive controller so that the stirring speed of the coagulant liquid is controlled to be, for example, usually in the range of 100 rpm or more, preferably 200 to 1,000 rpm, more preferably 300 to 900 rpm, and particularly preferably 400 to 800 rpm. The rotation of the stirring blade 33 is controlled by the drive controller so that the peripheral speed of the coagulant liquid is usually 0.5 m/s or higher, preferably 1 m/s or higher, more preferably 1.5 m/s or higher, particularly preferably 2 m/s or higher, most preferably 2.5 m/s or higher. Further, the rotation of the stirring blade 33 is controlled by the drive control unit so that the upper limit of the peripheral speed of the coagulant liquid is usually 50 m/s or lower, preferably 30 m/s or lower, more preferably 25 m/s or lower, and most preferably 20 m/s or lower.

The washing device 4 shown in FIG. 1 is configured to perform the above-described washing process. As schematically shown in FIG. 1, the washing device 4 includes, for example, a washing tank 40, a heating unit 41 that heats the inside of the washing tank 40, and a temperature control unit (not shown) that controls the temperature inside the washing tank 40. In the washing device 4, by mixing the hydrous crumbs produced in the coagulation device 3 with a large amount of water for washing, the ash content in the finally obtained acrylic rubber sheet can be effectively reduced.

The heating unit 41 of the washing device 4 is configured to heat the inside of the washing tank 40. In addition, the temperature control unit of the washing device 4 controls the temperature inside the washing tank 40 by controlling the heating operation by the heating unit 41 while monitoring the temperature inside the washing tank 40 measured by the thermometer. As described above, the temperature of the washing water in the washing tank 40 is controlled to be usually in the range of 40°C or higher, preferably 40 to 100°C, more preferably 50 to 90°C, and most preferably 60 to 80°C.

The hydrous crumbs washed in the washing device 4 is supplied to the screw-type extruder 5 which performs a dehydration process and a drying process. At this time, it is preferable that the hydrous crumbs after washing is supplied to the screw-type extruder 5 through a drainer 43 capable of separating free water. For the drainer 43, for example, a wire mesh, a screen, an electric sifter, or the like can be used.

Further, when the hydrous crumb after washing is supplied to the screw-type extruder 5, the temperature of the hydrous crumb is preferably 40°C or higher, more preferably 60°C or higher. For example, by setting the temperature of water used for washing in the washing device 4 to 60°C or higher (for example, 70°C), so that the temperature of the hydrous crumb when supplied to the screw-type extruder 5 is maintained at 60°C or higher. Otherwise, the hydrous crumb may be heated to a temperature of 40°C or higher, preferably 60°C or higher when being conveyed from the washing device 4 to the screw-type extruder 5. This makes it possible to effectively perform the dehydration process and the drying process, which are the subsequent processes, and to significantly reduce the water content of the finally obtained dry rubber.

The screw-type extruder 5 shown in FIG. 1 is configured to perform the processes related to the aforementioned dehydration process and the drying process. Although a screw-type extruder 5 is illustrated in FIG. 1 as a suitable example, a centrifuge, a squeezer, or the like may be used as a dehydrator that performs the process related to the dehydration process, and a hot air dryer, a reduced pressure dryer, an expander dryer, a kneader type dryer or the like may be used as a dryer that performs the process related to the drying process.

The screw-type extruder 5 is configured to mold the dry rubber obtained through the dehydration process and the drying process into a predetermined shape and to discharge the dry rubber. Specifically, the screw-type extruder 5 is provided with: a dehydration barrel section 53 having a function as a dehydrator to dehydrate the hydrous crumb washed by the washing device 4; a drying barrel section 54 having a function as a dryer for drying the hydrous crumb; and a die 59 having a molding function to mold a hydrous crumb on the downstream side of the screw-type extruder 5.

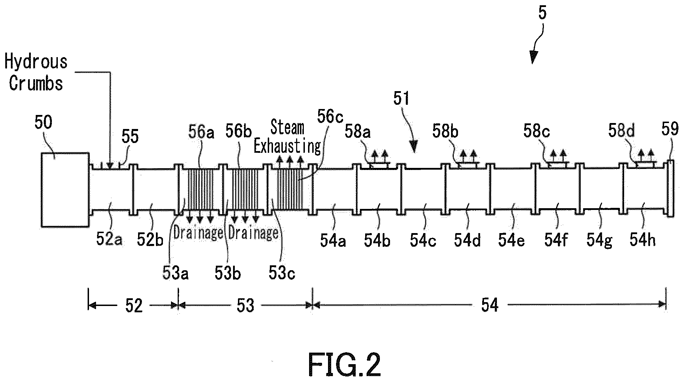

The configuration of the screw-type extruder 5 will be described below with reference to FIG. 2. FIG. 2 shows the configuration of a specific suitable example as the screw-type extruder 5 shown in FIG. 1. By the screw-type extruder 5, the above-described dehydration process and drying process can be suitably performed.

The screw-type extruder 5 shown in FIG. 2 is a twin-screw-type extruder / dryer including a pair of screws (not shown) in a barrel unit 51. The screw-type extruder 5 has a drive unit 50 that rotationally drives a pair of screws in the barrel unit 51. The drive unit 50 is attached to an upstream end (left end in FIG. 2) of the barrel unit 51. Further, the screw-type extruder 5 has a die 59 at a downstream end (right end in FIG. 2) of the barrel unit 51.

The barrel unit 51 has a supply barrel section 52, a dehydration barrel section 53, and a drying barrel section 54 from the upstream side to the downstream side (from the left side to the right side in FIG. 2).

The supply barrel section 52 is composed of two supply barrels, which are a first supply barrel 52a and a second supply barrel 52b.

Further, the dehydration barrel section 53 is composed of three dehydration barrels, which are a first dehydration barrel 53a, a second dehydration barrel 53b and a third dehydration barrel 53c.

The drying barrel section 54 includes eight drying barrels, which are a first drying barrel 54a, a second drying barrel 54b, a third drying barrel 54c, a fourth drying barrel 54d, a fifth drying barrel 54e, a sixth drying barrel 54f, a seventh drying barrel 54g, and an eighth drying barrel 54h.

Thus, the barrel unit 51 is configured by connecting the 13 divided barrels 52a to 52b, 53a to 53c, and 54a to 54h from the upstream side to the downstream side.

Further, the screw-type extruder 5 has a heating means (not shown) to individually heat each of the barrels 52a to 52b, 53a to 53c, and 54a to 54h. The hydrous crumbs in each of the barrels 52a to 52b, 53a to 53c, and 54a to 54h are heated to a predetermined temperature by the heating means. The heating means is provided with a number corresponding to each barrel 52a to 52b, 53a to 53c, 54a to 54h. As such a heating means, for example, a configuration in which high temperature steam is supplied from a steam supply means to a steam distribution jacket formed in each barrel 52a to 52b, 53a to 53c, 54a to 54h is adopted, but the configuration is not limited to this. Further, the screw-type extruder 5 has a temperature control means (not shown) to control the set temperature of each heating means corresponding to each barrel 52a to 52b, 53a to 53c, 54a to 54h.

It should be noted that the number of supply barrels, dehydration barrels, and drying barrels constituting the barrel sections 52, 53, and 54 of the barrel unit 51 is not limited to the embodiment shown in FIG.2, but the number can be set in accordance with the water content of the hydrous crumbs of the acrylic rubber to be dried and the like.

For example, the number of supply barrels installed in the supply barrel section 52 is, for example, 1 to 3. Further, the number of dehydration barrels installed in the dehydration barrel section 53 is preferably, for example, 2 to 10, and more preferably 3 to 6, since the hydrous crumbs of the sticky acrylic rubber can be efficiently dehydrated. Further, the number of the drying barrels installed in the drying barrel section 54 is, for example, preferably 2 to 10, and more preferably 3 to 8.

The pair of screws in the barrel unit 51 are rotationally driven by a driving means such as a motor stored in the driving unit 50. The pair of screws, extending from the upstream side to the downstream side in the barrel unit 51, is rotationally driven so that the pair of screws can convey the hydrous crumbs to the downstream side while mixing the hydrous crumbs supplied to the supply barrel section 52. The pair of screws is preferably a biaxial meshing type in which peaks and troughs are meshed with each other, whereby the dehydration efficiency and drying efficiency of the hydrous crumbs can be increased.

Further, the rotation direction of the pair of screws may be the same direction or different directions, but from the viewpoint of self-cleaning performance, a type that rotates in the same direction is preferable. The screw shape of the pair of screws is not particularly limited and may be any shape required for each barrel section 52, 53, 54.

The supply barrel section 52 is an area for supplying the hydrous crumbs into the barrel unit 51. The first supply barrel 52a of the supply barrel section 52 has a feed port 55 provided therewith for supplying the hydrous crumbs into the barrel unit 51.

The dehydration barrel section 53 is an area for separating and discharging a liquid (serum water) containing a coagulant from hydrous crumbs.

The first to third dehydration barrels 53a to 53c, constituting the dehydration barrel section 53, have dehydration slits 56a, 56b and 56c for discharging the moisture of the hydrous crumbs to the outside, respectively. A plurality of dehydrating slits 56a, 56b and 56c are formed in each of the dehydration barrels 53a to 53c.

The slit width of each dehydration slit 56a, 56b and 56c, that is, the opening may be appropriately selected according to the use conditions, and is usually 0.01 to 5 mm. From the viewpoint that the loss of the hydrous crumb is small and the dehydration of hydrous crumb can be efficiently performed, it is preferably 0.1 to 1 mm, and more preferably 0.2 to 0.6 mm.

There are two cases to remove water from the hydrous crumbs in the dehydration barrels 53a to 53c of the dehydration barrel section 53, which are a case to remove water in a liquid form from each of the dehydration slits 56a, 56b and 56c and to a case to remove water in a vapor state. In the dehydration barrel section 53 of the present embodiment, for distinction of the two cases, the case of removing water in a liquid state is defined as drainage, and the case of removing in a vapor state is defined as steam exhausting.

In the dehydration barrel section 53, it is preferable to use drainage and steam exhausting in combination, since it is possible to efficiently reduce the water content of the sticky acrylic rubber. In the dehydration barrel section 53, which of the first to third dehydration barrels 53a to 53c is to be used for drainage or discharging steam may be appropriately set according to the purpose of use, but it is preferable to increase the number of dehydration barrels for drainage in a case of reducing ash content in usually produced acrylic rubber. In that case, for example, as shown in FIG. 2, the first and second dehydration barrels 53a and 53b on the upstream side perform drainage, and the third dehydration barrel 53c on the downstream side performs steam exhausting. Further, for example, when the dehydration barrel section 53 has four dehydration barrels, a mode in which, for example, three upstream dehydration barrels perform drainage and one downstream dehydration barrel performs steam exhausting can be considered. On the other hand, in the case of reducing the water content, it is advantageous to increase the number of dehydration barrels for steam exhausting.

The set temperature of the dehydration barrel section 53 is usually in the range of 60 to 150°C, preferably 70 to 140°C, and more preferably 80 to 130°C, as described in the dehydration / drying process above. The set temperature of the dehydration barrel for dehydration in the drainage state is usually in the range of 60 to 120°C, preferably 70 to 110°C, more preferably 80 to 100°C, and the set temperature of the dehydration barrel for dehydration in the steam exhausting state is usually in the range of 100 to 150°C, preferably 105 to 140°C, more preferably 110 to 130°C.

The drying barrel section 54 is an area for drying the hydrous crumbs after dehydration under reduced pressure. Out of the first to eighth drying barrels 54a to 54h forming the drying barrel section 54, the second drying barrel 54b, the fourth drying barrel 54d, the sixth drying barrel 54f, and the eighth drying barrel 54h are provided with vent ports 58a, 58b, 58c and 58d for deaeration, respectively. A vent pipe (not shown) is connected to each of the vent ports 58a, 58b, 58c and 58d.

A vacuum pump (not shown) is connected to the end of each vent pipe, and the inside of the drying barrel section 54 is depressurized to a predetermined pressure by the operation of these vacuum pumps. The screw-type extruder 5 has pressure control means (not shown) for controlling the operation of the vacuum pumps and controlling the degree of pressure reduction in the drying barrel section 54.

The degree of pressure reduction in the drying barrel section 54 may be appropriately selected, but as described above, it is usually set to 1 to 50 kPa, preferably 2 to 30 kPa, and more preferably 3 to 20 kPa.

The set temperature in the drying barrel section 54 may be appropriately selected, but as described above, it is usually set to 100 to 250°C, preferably 110 to 200°C, and more preferably 120 to 180°C.

In each of the drying barrels 54a to 54h forming the drying barrel section 54, the temperature thereof may be set to an approximate value of all the drying barrels 54a to 54h or different values, but it is preferable to set the temperature of the downstream side (the side of the die 59) higher than the temperature of the upstream side (the side of the dehydration barrel section 53), since the drying efficiency is improved.

The die 59 is a mold arranged at the downstream end of the barrel unit 51 and has a discharge port having a predetermined nozzle shape. The acrylic rubber dried in the drying barrel section 54 passes through the discharge port of the die 59 to be extruded into a shape corresponding to the predetermined nozzle shape. In the present embodiment of the present invention, the acrylic rubber passing through the die 59 can be extruded and molded into a sheet shape by forming the nozzle shape of the die 59 into a substantially rectangular shape. A breaker plate or a wire net may or may not be provided between the screw and the die 59.

According to the screw-type extruder 5 according to the present embodiment, the hydrous crumbs of the raw material acrylic rubber are extruded into a sheet-shaped dry rubber in a following way.

The hydrous crumbs of acrylic rubber obtained through the washing process is supplied to the supply barrel section 52 from the feed port 55. The hydrous crumb supplied to the supply barrel section 52 is sent from the supply barrel section 52 to the dehydration barrel section 53 by rotation of a pair of screws in the barrel unit 51. In the dehydration barrel section 53, as described above, the water contained in the hydrous crumbs is drained or the steam is discharged from the dehydration slits 56a, 56b, and 56c provided in the first to third dehydration barrels 53a to 53c, respectively, so that the hydrous crumbs are dehydrated.

The hydrous crumbs dehydrated in the dehydration barrel section 53 is sent to the drying barrel section 54 by rotation of a pair of screws in the barrel unit 51. The hydrous crumbs sent to the drying barrel section 54 are plasticized and mixed to form a melt, which is conveyed to the downstream side while being heated. Then, the water contained in the melt of the acrylic rubber is vaporized, and the water (vapor) is discharged to the outside through vent pipes (not shown) connected to the vent ports 58a, 58b, 58c, 58d.

By passing through the drying barrel section 54 as described above, the hydrous crumbs are dried to become a melt of acrylic rubber, so that the acrylic rubber is supplied to the die 59 by the rotation of a pair of screws in the barrel unit 51, and is extruded from the die 59 as a sheet-shaped dry rubber.

Hereinafter, an example of operating conditions of the screw-type extruder 5 according to the present embodiment will be described.

The rotation speed (N) of the pair of screws in the barrel unit 51 may be appropriately selected according to various conditions, and is usually 10 to 1,000 rpm, and since the water content and the gel amount of the acrylic rubber sheet can be efficiently reduced, the rotation speed (N) of the pair of screws in the barrel unit 51 is preferably 50 to 750 rpm, more preferably 100 to 500 rpm, and most preferably 120 to 300 rpm.

The extrusion rate (Q) of the acrylic rubber is not particularly limited, but it is usually 100 to 1,500 kg/hr, preferably 300 to 1,200 kg/hr, more preferably 400 to 1,000 kg/hr, and most preferably 500 to 800 kg/hr.

The ratio (Q / N) of the extrusion amount (Q) of the acrylic rubber to the rotation speed (N) of the screw is not particularly limited, but it is usually 1 to 20, preferably 2 to 10, and more preferably 3 to 8, and particularly preferably 4 to 6.

The cooling device 6 shown in FIG. 1 is configured to cool the dry rubber obtained through the dehydration process using a dehydrator and the drying process using a dryer. As a cooling method by the cooling device 6, various methods including an air cooling method in which air is blown or under cooling, a water spraying method in which water is sprayed, a dipping method in which water is immersed, and the like can be adopted. Otherwise, the dry rubber may be cooled by leaving it at room temperature.

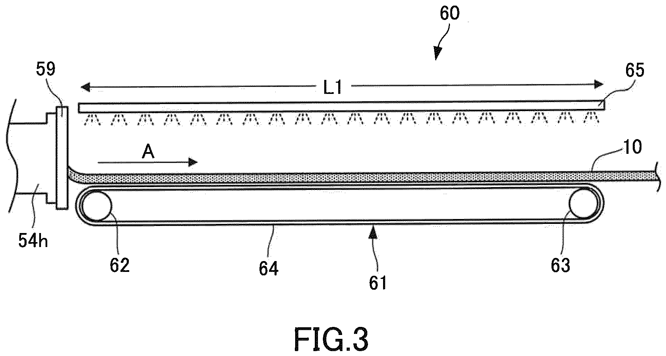

Hereinafter, as an example of the cooling device 6, a transport-type cooling device 60 that cools the sheet-shaped dry rubber 10 molded into a sheet shape will be described with reference to FIG. 3.

FIG. 3 shows a configuration of a conveyor-type cooling device 60 suitable as the cooling device 6 shown in FIG. 1. The conveyor-type cooling device 60 shown in FIG. 3 is configured to cool the sheet-shaped dry rubber 10 discharged from the discharge port of the die 59 of the screw-type extruder 5 by an air cooling method while conveying the sheet-type dry rubber 10. By using this conveyor-type cooling device 60, the sheet-shaped dry rubber 10 discharged from the screw-type extruder 5 can be suitably cooled.

The conveyor-type cooling device 60 shown in FIG. 3 is used, for example, directly connected to the die 59 of the screw-type extruder 5 shown in FIG. 2 or installed close to the die 59.

The conveyor-type cooling device 60 is provided with a conveyor 61 that conveys the sheet-shaped dry rubber 10 discharged from the die 59 of the screw-type extruder 5 in the direction of arrow A in FIG. 3, and a cooling means 65 for blowing cool air to the sheet-shaped dry rubber 10 on the conveyor 61.

The conveyor 61 has rollers 62 and 63, and a conveyor belt 64 that is wound around these rollers 62 and 63 and on which the sheet-shaped dry rubber 10 is placed. The conveyor 61 is configured to continuously convey the sheet-shaped dry rubber 10 discharged from the die 59 of the screw-type extruder 5 onto the conveyor belt 64 to the downstream side (right side in FIG. 3).

The cooling means 65 is not particularly limited, but examples thereof include a cooling means that has a structure capable of blowing cooling air sent from a cooling air generation means (not shown) onto the surface of the sheet-shaped dry rubber 10 on the conveyor belt 64.

The length L1 of the conveyor 61 and the cooling means 65 (the length of the portion to which the cooling air can be blown) of the transport cooling device 60 is not particularly limited, but is, for example, 10 to 100 m, preferably 20 to 50 m. Further, the conveyance speed of the sheet-shaped dry rubber 10 in the conveyor-type cooling device 60, which can be appropriately adjusted in accordance with the length L1 of the conveyor 61 and the cooling means 65, the discharge speed of the sheet-shaped dry rubber 10 discharged from the die 59 of the screw-type extruder 5, a target cooling speed, a target cooling time, and the like, is, for example, 10 to 100 m/hr, and more preferably 15 to 70 m/hr.

According to the conveyor-type cooling device 60 shown in FIG. 3, the sheet-shaped dry rubber 10 discharged from the die 59 of the screw-type extruder 5 is conveyed by the conveyor 61 while the sheet-shaped dry rubber 10 is cooled by the cooling means 65 by blowing the cooling air to the sheet-shaped dry rubber 10.

It should be noted that the conveyor-type cooling device 60 is not particularly limited to the configuration including one conveyor 61 and one cooling means 65 as shown in FIG. 3, but it may be configured to be provided with two or more conveyors 61 and two or more cooling means 65 corresponding thereto. In that case, the total length of each of the two or more conveyors 61 and the cooling means 65 may be set within the above range.

The baling device 7 shown in FIG. 1 is configured to process a dry rubber extruded from a screw-type extruder 5 and cooled by a cooling device 6 to produce a bale, which is shaped in a chunk of a block. The weight and shape of the acrylic rubber bale produced by the baling device 7 are not particularly limited, but, for example, a substantially rectangular parallelepiped acrylic rubber bale weighing about 20 kg is produced.

Further, an acrylic rubber bale may be produced by laminating the sheet-shaped dry rubber 10 produced by the screw-type extruder 5. For example, a cutting mechanism for cutting the sheet-shaped dry rubber 10 may be provided in the baling device 7 provided on the downstream side of the conveyor-type cooling device 60 shown in FIG. 3. Specifically, for example, the cutting mechanism of the baling device 7 is configured to continuously cuts the cooled sheet-shaped dry rubber 10 at predetermined intervals and processes it into a cut sheet-shaped dry rubber 16 having a predetermined size. By laminating a plurality of cut sheet-shaped dry rubbers 16 cut into a predetermined size by the cutting mechanism, an acrylic rubber bale in which the cut sheet-shaped dry rubbers 16 are laminated can be produced.

When producing an acrylic rubber bale in which the cut sheet-shaped dry rubbers 16 are laminated, it is preferable to laminate the cut sheet-shaped dry rubbers 16 at 40°C or higher, for example. By laminating the cut sheet-shaped dry rubbers 16 at 40°C or higher, good air release is realized by further cooling and compression by its own weight.

[EXAMPLES]

The present invention will be described more specifically below with reference to Examples and Comparative Examples. In addition, "part", "%" and "ratio" in each example are based on weight unless otherwise specified. Various physical properties were evaluated according to the following methods.

[Monomer Composition]

Regarding the monomer composition in the acrylic rubber, the monomer composition of each monomer unit in the acrylic rubber was confirmed by H-NMR, and existence of the activity of the reactive group remained in the acrylic rubber and the content of the reactive group were confirmed by the following test method. Further, the content ratio of each monomer unit in the acrylic rubber was calculated from the amount of each monomer used in the polymerization reaction and the polymerization conversion rate. Specifically, the content ratio of each monomer unit was regarded as the same as the amount of each monomer used, since the polymerization reaction was an emulsion polymerization reaction, and the polymerization conversion rate was about 100% in which no unreacted monomer could be confirmed.

[Reactive Group Content]

The content of the reactive group of the acrylic rubber was measured as the content in the acrylic rubber sheet or the acrylic rubber bale by the following method:

(1) The amount of carboxyl group was calculated by dissolving the acrylic rubber sheet or the acrylic rubber bale in acetone and performing potentiometric titration with a potassium hydroxide solution.
(2) The amount of epoxy groups was calculated by dissolving the acrylic rubber sheet or the acrylic rubber bale in methyl ethyl ketone, adding a specified amount of hydrochloric acid thereto to react with epoxy groups, and titrating the amount of residual hydrochloric acid with potassium hydroxide.
(3) The amount of chlorine was calculated by completely burning the acrylic rubber sheet or the acrylic rubber bale in a combustion flask, absorbing the generated chlorine in water, and titrating with silver nitrate.

[Ash Content]

The ash content (%) contained in the acrylic rubber sheet or acrylic rubber bale was measured according to JIS K6228 A method.

[Ash Component Content]

The amount of each component (ppm) in the ash of the acrylic rubber sheet or the acrylic rubber bale was measured by XRF using a ZSX Primus (manufactured by Rigaku Corporation) by pressing the ash collected during the above-mentioned ash content measurement onto a titration filter paper having a diameter of 20 mm.

[Gel Amount]

The gel amount (%) of the acrylic rubber sheet or acrylic rubber bale is the amount of insoluble matter in methyl ethyl ketone, and was calculated by the following method.
About 0.2 g of acrylic rubber sheet or acrylic rubber bale was weighed (X g), immersed in 100 ml of methyl ethyl ketone and left at room temperature for 24 hours, and then a filtrate in which only the rubber component soluble in methyl ethyl ketone was dissolved, was obtained by filtering out the insoluble matter in methyl ethyl ketone using an 80 mesh wire net, thereafter the filtrate thus obtained was evaporated and dried to be solidified, and the dried solid content (Y g) was weighed, and calculated the gel amount by the following formula:

$$\text{Gel Amount (\%)} = 100 \times (X - Y) / X$$

[Specific Gravity]

The specific gravity of the acrylic rubber sheet or acrylic rubber bale was measured according to JIS K6268 crosslinked rubber-A method of density measurement.

[Glass Transition Temperature (Tg)]

The glass transition temperature (Tg) of the acrylic rubber sheet or acrylic rubber bale was measured using a differential scanning calorimeter (DSC, product name "X-DSC7000", manufactured by Hitachi High-Tech Science Corporation).

[pH]

6 g ($\pm$ 0.05 g) of the acrylic rubber sheet or acrylic rubber bale was dissolved in 100 g of tetrahydrofuran, then 2.0 ml of distilled water was added, and pH of the acrylic rubber sheet or acrylic rubber bale was measured by with a pH electrode after confirming that the acrylic rubber sheet or acrylic rubber bale was completely dissolved.

[Water Content]

The water content (%) of the acrylic rubber sheet or acrylic rubber bale was measured according to JIS K6238-1: Oven A (volatile content measurement) method.

[Molecular Weight and Molecular Weight Distribution]

The weight average molecular weight (Mw) and the molecular weight distribution (Mz / Mw) of the acrylic rubber constituting the acrylic rubber sheet or acrylic rubber bale are the absolute molecular weight and the absolute molecular weight distribution of the acrylic rubber sheet or acrylic rubber bale measured by the GPC-MALS method in which a solution in which 0.05 mol / L of lithium chloride and 37% concentrated hydrochloric acid with a concentration of 0.01% are added to dimethylformamide is used as a solvent. To be specific, a multi-angle laser light scattering photometer (MALS) and a refractive index detector (RI) were incorporated into a GPC (Gel Permeation Chromatography) device, and the light scattering intensity and refraction rate difference of a molecular chain solution size-separated by the GPC device were measured by following the elution time, and the molecular weight of the solute and its content rate were sequentially calculated and determined. The measurement conditions and the measurement method by the GPC device are as follows.

Column: TSKgel $\alpha$-M 2 pieces ($\varphi$7.8 mm $\times$ 30 cm, manufactured by Tosoh Corporation)
Column temperature: 40°C
Flow rate: 0.8 ml/mm
Sample preparation: 5 ml of solvent was added to 10 mg of the sample, and the mixture was gently stirred at room temperature (dissolution was visually confirmed). Thereafter, the sample was filtrated using a 0.5 $\mu$m filter.

[Complex Viscosity]

The complex viscosity $\eta$ at each temperature of the acrylic rubber sheet or the acrylic rubber bale was determined by measuring the temperature dispersion (40 to 120°C) at a strain of 473% and 1 Hz using a dynamic viscoelasticity measuring device "Rubber Process Analyzer RPA-2000" (manufactured by Alpha Technology Co., Ltd.). Here, values of $\eta$ (100°C) /$\eta$ (60°C) and $\eta$ (60°C) / $\eta$ (100°C) were calculated, where, among the above-mentioned dynamic viscoelasticities, the dynamic viscoelasticity at 60°C is defined as the complex viscosity $\eta$ (60°C), and the dynamic viscoelasticity at 100°C is defined as the complex viscosity $\eta$ (100°C).

[Mooney Viscosity (ML1+4,100°C]

The Mooney viscosity (ML1+4,100°C) of the acrylic rubber bale was measured in accordance with the JIS K6300 uncross-linked rubber physical test method.

[Processability Evaluation]

The processability of the rubber sample was measured by adding the rubber sample to a Banbury mixer heated to 50°C, kneading for 1 minute, and then adding the compounding agent A having the composition of the rubber mixture shown in Table 1 to obtain the first-stage rubber mixture. The time until the first-stage rubber mixture was integrated to show the maximum torque value, that is, BIT (Black Incorporation Time) was measured and evaluated by an index with Comparative Example 1 being 100 (the smaller the index, the better the processability).

[Water Resistance Evaluation]

An immersion test was conducted in which a cross-linked product of the rubber sample was immersed in distilled water at a temperature of 85°C for 100 hours in accordance with JIS K6258, and the volume change rate before and after immersion was calculated according to the following formula, and the water resistance of the rubber sample was evaluated by an index of the Comparison Example 1 being 100 (the smaller the index, the more excellent the water resistance).

$$\text{Volume change rate before and after immersion (\%)} = ((\text{test piece volume after immersion} - \text{test piece volume before immersion}) \, / \, \text{test piece volume before immersion}) \times 100.$$

[Normal Physical Property Evaluation]

The normal physical properties of the acrylic rubber were evaluated according to JIS K6251 by measuring the breaking strength, 100% tensile stress and breaking elongation of the cross-linked product of the acrylic rubber, the normal physical properties were evaluated based on the following criteria:

(1) The breaking strength was evaluated as ◎, good, for 10 MPa or more and as ×, unacceptable, for less than 10 MPa.
(2) For 100% tensile stress, 5 MPa or more was evaluated as ◎ and less than 5 MPa was evaluated as ×.
(3) The breaking elongation was evaluated as ◎ for 150% or more and as × for less than 150%.

[Example 1]

In a mixing container provided with a homomixer, 46 parts of pure water, 48.5 parts of ethyl acrylate, 29 parts of n-butyl acrylate, 21 parts of methoxyethyl acrylate, 1.5 parts of vinyl chloroacetate, and as emulsifiers, 0.709 part of sodium lauryl sulfate and 1.82 parts of polyoxyethylene dodecyl ether (molecular weight 1,500) were charged and stirred to obtain a monomer emulsion.
Next, 170 parts of pure water and 3 parts of the monomer emulsion obtained as mentioned above were put into a polymerization reaction tank provided with a thermometer and a stirring device, and cooled to 12°C under a nitrogen stream. Subsequently, the rest of the monomer emulsion, 0.00033 part of ferrous sulfate, 0.264 part of sodium ascorbate, and 0.22 part of potassium persulfate were continuously dropped into the polymerization reaction tank over 3 hours. Thereafter, the reaction was continued while maintaining the temperature in the polymerization reaction tank at 23°C, and upon the confirmation that the polymerization conversion rate reached about 100%, hydroquinone as a polymerization terminator was added to terminate the polymerization reaction, and the emulsion polymerization liquid was obtained.
In a coagulation tank provided with a thermometer and a stirring device, 2% sodium sulfate aqueous solution (coagulant liquid) was heated to 80°C and vigorously stirred (rotation speed of 600 rpm, peripheral speed of 3.1 m/s). The obtained above emulsion polymerization liquid heated to 80°C was continuously added to the 2% sodium sulfate aqueous solution, so that the polymer was coagulated, and then the coagulated polymer was filtrated, thereby to obtain hydrous crumbs.
Subsequently, 194 parts of hot water (70°C) was added to the coagulation tank, and the mixture was stirred for 15 minutes, and then water was discharged, and again 194 parts of hot water (70°C) was added and the mixture was stirred for 15 minutes to wash the hydrous crumbs. The washed hydrous crumbs (temperature of hydrous crumbs 65°C) were supplied to a screw-type extruder, dehydrated, and dried to extrude a sheet-shaped dry rubber having a width of 300 mm and a thickness of 10 mm. Then, the sheet-shaped dry rubber was cooled at a cooling rate of 200°C/hr by using a conveyance type cooling device directly connected to the screw-type extruder.
The screw-type extruder used in this Example 1 is constituted by one supply barrel, three dehydration barrels (first to third dehydration barrels), and five drying barrels (first to fifth drying barrels). The first and the second dehydration barrels are configured to perform drainage, while the third dehydration barrels are configured to perform steam exhausting. The operating conditions of the screw-type extruder were as follows.
Water Content:

- The water content of the hydrous crumbs after the drainage in the second dehydration barrel: 20%
- The water content of the hydrous crumbs after the steam exhausting in the third dehydration barrel: 10%
- The water content of the hydrous crumbs after the drying in the fifth drying barrel: 0.4%

Rubber Temperature:

- Temperature of the hydrous crumbs to be supplied to the first supply barrel: 65°C
- Temperature of the rubber discharged from the screw-type extruder: 140°C

Set Temperature of Each Barrel:

- First dehydration barrel: 90°C
- Second dehydration barrel: 100°C
- Third dehydration barrel: 120°C
- First drying barrel: 120°C
- Second drying barrel: 130°C
- Third drying barrel: 140°C
- Fourth drying barrel: 160°C
- Fifth drying barrel: 180°C

Operating Conditions:

- Diameter of the screw in the barrel unit (D): 132 mm
- Total length of screw (L): 4620 mm
- L/D: 35
- Rotation speed of the screw in the barrel unit: 135 rpm
- Extrusion rate of the rubber from the die: 700 kg / hr
- Resin pressure in the die: 2 MPa

The sheet-shaped dry rubber extruded from the screw-type extruder was cooled down to 50°C and then cut the dry rubber by a cutter, so that acrylic rubber sheet (A) was produced. The reactive group content, ash content, ash component content, specific gravity, gel amount, glass transition temperature (Tg), pH, water content, molecular weight, molecular weight distribution, complex viscosity and Mooney viscosity (ML1+4,100°C) of the acrylic rubber sheet (A) thus obtained were measured and shown in Table 2. Here, the value of "Water Content (%) after Dehydration (Drainage)" shown in the Dehydration Process column of the Table 2 indicates the water content of the hydrous crumbs immediately after the drainage by the drainage-type dehydration barrel (immediately prior to the steam-exhausting-type dehydration barrel).

Next, before the acrylic rubber sheet (A) does not fall below 40°C or lower, a plurality of the cut acrylic rubber sheets (A) are laminated so as to be 20 parts (20 kg), thereby to obtain the acrylic rubber bale (A). The reactive group content, ash content, ash component content, specific gravity, gel amount, glass transition temperature (Tg), pH, water content, molecular weight, molecular weight distribution, complex viscosity and Mooney viscosity (ML1+4,100°C) of the acrylic rubber sheet (A) thus obtained were measured

100 parts of the acrylic rubber bale (A) and the compounding agent A of "Composition 1" shown in Table 1 were added and mixed at 50°C for 5 minutes by a Banbury mixer. At this time, the processability of the acrylic rubber sheet (A) was evaluated, and the result is shown in Table 2. Next, the obtained mixture was transferred to a roll at 50°C, and the compounding agent B of "Composition 1" was added and mixed to obtain a rubber mixture.

[Table 1]

| Combination of acrylic rubber mixture | | | | | |
|---|---|---|---|---|---|
| Reactive Group | | Halogen Group | Epoxy Group | Carboxyl Group |
| Composition (Parts) | | Composition 1 | Composition 2 | Composition 3 |
| Compounding Agent A | Acrylic Rubber Sheet or Crumb | 100 | 100 | 100 |
| | SEAST3 (HAF) ※1 | 60 | 60 | 60 |
| | Stearic Acid | 1 | 1 | 1 |
| | Ester Wax | 1 | 1 | 1 |
| | NOCRAC CD ※2 | 2 | 2 | 2 |
| Compounding Agent B | Hexamethylenediamine carbamate | – | – | 0.5 |
| | Rhenogran®XLA-60 ※3 (Synthetic mixture of active amine and retarder) | – | – | 2 |
| | Ammonium benzoate | – | 1.5 | – |
| | Zinc dibutyldithiocarbamate | 1.5 | – | – |
| | 2,4,6-Trimercapto-s-triazine | 0.5 | – | – |
| | N- (cyclohexylthio) phthalimide | 0.2 | – | – |
| | Diethylthiourea | 0.3 | – | – |

※1: SEAST3 (HAF) in the table is carbon black (made by Tokai Carbon Co., Ltd.).

※2: The Nocrac CD in the table is 4,4'-bis ($\alpha$, $\alpha$-dimethylbenzyl) diphenylamine : made by OUCHI SHINKO CHEMICAL INDUSTRIAL CO.,LTD.).

※3: Rhenogran® XLA-60 in the table is a vulcanization accelerator (made by LANXESS CO.,LTD.).

The rubber mixture thus obtained was put into a mold having a length of 15 cm, a width of 15 cm, and a depth of 0.2 cm, and a primary cross-linking was performed by pressurizing at a pressure of 10 MPa while pressing for 10 minutes at 180°C, and then a secondary cross-linking was performed by further heating the obtained primary cross-linked product in a gear-type oven for 2 hours at 180°C, thereby to obtain a sheet-shaped rubber cross-linked product. Then, a water resistance test and a normal physical property evaluation were conducted by cutting out a test piece of 3 cm × 2 cm × 0.2 cm from the obtained sheet-shaped rubber cross-linked product, and the results are shown in Table 2.

[Example 2]

An acrylic rubber sheet (B) and acrylic rubber bale (B) were obtained in the same manner as in Example 1 except that the monomer components were changed to 98.5 parts of ethyl acrylate and 1.5 parts of vinyl chloroacetate, the temperature of the first dehydrating barrel of the screw-type extruder was changed to 100°C, and the temperature of the second dehydrating barrel was changed to 120°C. the drainage was changed to be done only in the first dehydration barrel, and the water content of the hydrous crumbs after draining in the first dehydration barrel was changed to 30%, and the properties thereof were evaluated. The results of the acrylic rubber sheet (B) are shown in Table 2.

[Example 3]

An acrylic rubber sheet (C) and acrylic rubber bale (C) were obtained in the same manner as in Example 2 except that the monomer components were changed to 43 parts of ethyl acrylate, 25 parts of n-butyl acrylate, 26 parts of methoxyethyl acrylate, 2 parts of acrylonitrile and 4 parts of allyl glycidyl ether, and the properties thereof (compounding agent was changed to "Composition 2") were evaluated. The results of the acrylic rubber sheet (C) are shown in Table 2.

[Example 4]

An acrylic rubber sheet (D) and acrylic rubber bale (D) were obtained in the same manner as in Example 2 except that the monomer components were changed to 4.5 parts of ethyl acrylate, 64.5 parts of n-butyl acrylate, 39.5 parts of methoxyethyl acrylate, and 1.5 parts of mono-n-butyl fumarate, and properties thereof (the compounding agent was changed to "Composition 3") were evaluated. The results of the acrylic rubber sheet (D) are shown in Table 2.

[Example 5]

An acrylic rubber sheet (E) and acrylic rubber bale (E) were obtained in the same manner as in Example 2 except that the monomer components were changed to 42.2 parts of ethyl acrylate, 35 parts of n-butyl acrylate, 20 parts of methoxyethyl acrylate, 1.5 parts of acrylonitrile, 1.3 parts of vinyl chloroacetate, and properties thereof were evaluated. The results of the acrylic rubber sheet (E) are shown in Table 2.

[Comparative Example 1]

A 0.7% aqueous sodium sulfate aqueous solution was added to an emulsion polymerization liquid (rotation speed 100 rpm, peripheral speed 0.5 m / s) obtained by emulsion polymerization in the same manner as in Example 5 to generate hydrous crumbs, and added 194 parts of industrial water to100 parts of the hydrous crumbs after generation, stirred for 5 minutes in a coagulation tank at 25°C, washed the hydrous crumbs 4 times to drain water from the coagulation tank, and then added 194 parts of sulfuric acid aqueous solution of pH3, stirred for 5 minutes at 25°C, drained water from the coagulation tank, performed acid cleaning once, and then added 194 parts of pure water to perform pure water cleaning once, and thereafter dried the washed hydrous crumbs by a hot air drier of 160°C, thereby to obtain acrylic rubber (F) having a water content of 0.4% by weight. The properties of the obtained crumb-shaped acrylic rubber (F) were evaluated and shown in Table 2.

[Reference Example 1]

Processes until the washing process were performed in the same manner as in Example 5, and the hydrous crumbs after washing were dried by a hot air dryer of 160°C so that an acrylic rubber (G) having a water content of 0.4% by weight was obtained. The properties of the obtained crumb-shaped acrylic rubber (G) were evaluated and shown in Table 2.

[Table 2]

| | Example 1 | Example 2 | Example 3 | Example 4 | Example 5 | Comparative Example 1 | Reference Example 1 |
|---|---|---|---|---|---|---|---|
| Type of Acrylic Rubber Sheet or Crumb | (A) | (B) | (C) | (D) | (E) | (F) | (G) |
| Reactive group type | Chlorine | Chlorine | Epoxy Group | Carboxyl Group | Chlorine | Chlorine | Chlorine |
| Reactive group content (%) | 0.3 | 0.31 | 0.4 | 0.31 | 0.27 | 0.27 | 0.27 |
| **Monomeric unit Composition of Acrylic Rubber (%)** | | | | | | | |
| Ethyl acrylate | 48.5 | 98.5 | 43 | 4.5 | 42.2 | 42.2 | 42.2 |
| n–butyl acrylate | 29 | – | 25 | 64.5 | 35 | 35 | 35 |
| Methoxyethyl acrylate | 21 | – | 26 | 39.5 | 20 | 20 | 20 |
| Acrylonitrile | – | – | 2 | – | 1.5 | 1.5 | 1.5 |
| Mono–n–butyl fumarate | – | – | – | 1.5 | – | – | – |
| Allyl glycidyl ether | – | – | 4 | – | – | – | – |
| Chlorovinyl acetate | 1.5 | 1.5 | – | – | 1.3 | 1.3 | 1.3 |
| **Emulsifier (Parts)** | | | | | | | |
| Lauryl sulfate sodium salt | 0.709 | 0.709 | 0.709 | 0.709 | 0.709 | 0.709 | 0.709 |
| Polyoxyethylene dodecyl ether | 1.82 | 1.82 | 1.82 | 1.82 | 1.82 | 1.82 | 1.82 |
| **Coagulation Process** | | | | | | | |
| Coagulant | $Na_2SO_4$ | $Na_2SO_4$ | $Na_2SO_4$ | $Na_2SO_4$ | $Na_2SO_4$ | $Na_2SO_4$ | $Na_2SO_4$ |
| Coagulant concentration (%) | 2 | 2 | 2 | 2 | 2 | 0.7 | 2 |
| Method of addition ※ | Lx ↓ | Lx ↓ | Lx ↓ | Lx ↓ | Lx ↓ | Coa ↓ | Lx ↓ |
| Stirring speed (rpm) | 600 | 600 | 600 | 600 | 600 | 150 | 600 |
| Peripheral speed (m/s) | 3.1 | 3.1 | 3.1 | 3.1 | 3.1 | 0.5 | 3.1 |
| **Washing Process** | | | | | | | |
| Water temperature (°C) | 70 | 70 | 70 | 70 | 70 | 25 | 70 |
| Number of washings | 2 | 2 | 2 | 2 | 2 | 4+1+1 | 2 |
| Dehydration Process | Yes | Yes | Yes | Yes | Yes | No | No |
| Water content (%) after dehydration (drainage) | 20 | 30 | 30 | 30 | 30 | – | – |
| Product Shape | Sheet | Sheet | Sheet | Sheet | Sheet | Crumb | Crumb |
| **Ash Properties of Acrylic Rubber Sheet or Crumb** | | | | | | | |
| Ash Content (%) | 0.064 | 0.083 | 0.082 | 0.085 | 0.090 | 0.285 | 0.185 |
| **Ash Content** | | | | | | | |
| P (ppm) | 2 | 3 | 4 | 4 | 4 | 15 | 10 |
| Mg (ppm) | 7 | 11 | 12 | 10 | 10 | 10 | 2 |
| Na (ppm) | 265 | 344 | 343 | 354 | 372 | 1390 | 766 |
| Ca (ppm) | 6 | 8 | 18 | 16 | 16 | 20 | 10 |
| S (ppm) | 329 | 417 | 408 | 415 | 456 | 1200 | 911 |
| Na+S (% in Ash) | 93 | 91 | 91 | 90 | 92 | 91 | 91 |
| Na/S (Ratio) | 0.81 | 0.82 | 0.84 | 0.85 | 0.82 | 1.16 | 0.84 |
| **Property Values of Acrylic Rubber Sheet or Crumb** | | | | | | | |
| Specific gravity | 1.074 | 1.086 | 1.064 | 1.074 | 1.059 | 0.713 | 0.759 |
| Gel amount (%) | 1.5 | 1.9 | 2.5 | 3.4 | 2.4 | 70.5 | 65.8 |
| Tg (°C) | −30 | −1.5 | −23 | −38 | −29 | −29 | −29 |
| pH | 4.3 | 3.9 | 4.4 | 4.6 | 4.5 | 3.1 | 4.5 |
| Water content (%) | 0.4 | 0.4 | 0.4 | 0.3 | 0.4 | 0.4 | 0.4 |
| Mw/1000 | 1420 | 1520 | 1450 | 1380 | 1480 | 1480 | 1480 |
| Mz/Mw | 1.67 | 1.72 | 1.75 | 1.69 | 1.74 | 1.74 | 1.74 |
| $\eta$ (100°C) (Pa·s) | 3108 | 3422 | 2945 | 3124 | 2995 | 2990 | 3005 |
| $\eta$ (60°C) (Pa·s) | 3541 | 4059 | 3246 | 3360 | 3450 | 3380 | 3450 |
| Viscosity ratio $\eta$ (60°C) / $\eta$ (100°C) | 1.14 | 1.19 | 1.1 | 1.08 | 1.15 | 1.17 | 1.15 |
| Viscosity ratio $\eta$ (100°C) / $\eta$ (60°C) | 0.88 | 0.84 | 0.91 | 0.93 | 0.87 | 0.86 | 0.87 |
| Mooney viscosity (ML1+4, 100°C) | 33 | 53 | 35 | 33 | 34 | 34 | 34 |
| **Property Evaluation of Acrylic Rubber Sheet or Crumb** | | | | | | | |
| **Processability Evaluation (50°C)** | | | | | | | |
| BIT (Index) | 21 | 22 | 22 | 23 | 22 | 100 | 95 |
| **Water Resistance Test (85°C × 100hr)** | | | | | | | |
| Volume change rate (Index) | 26 | 30 | 20 | 21 | 35 | 100 | 56 |
| **Normal Physical Property Evaluation** | | | | | | | |
| Breaking strength | ◎ | ◎ | ◎ | ◎ | ◎ | ◎ | ◎ |
| 100% tensile stress | ◎ | ◎ | ◎ | ◎ | ◎ | ◎ | ◎ |
| Breaking elongation | ◎ | ◎ | ◎ | ◎ | ◎ | ◎ | ◎ |

※ In the table, Lx ↓ indicates that the emulsion polymerization liquid was added to the coagulant liquid, and Coa ↓ indicates that the coagulant liquid was added to the emulsion polymerization liquid.

From Table 2, it can be understood that the acryl rubber sheets (A) to (E) of the present invention comprising an acrylic rubber having a reactive group, having a weight average molecular weight (Mw) of 100,000 to 5,000,000, and having a ratio (Mz / Mw) of the Z-average molecular weight (Mz) with respect to the weight average molecular weight (Mw) of 1.3 or more, wherein an ash content is 0.2% by weight or less, an amount of gel insoluble in methyl ethyl ketone is 50% by weight or less, and a water content is less than 1% by weight, are remarkably excellent in processability and water resistance while maintaining excellent normal physical properties including breaking strength (Examples 1 to 5).

From Table 2, it can be understood that the acrylic rubber sheets (A) to (E) and the crumb-shaped acrylic rubbers (F) to (G) produced under the conditions of the Examples of the present application, Comparative Example and Reference Example are excellent in normal physical properties including breaking strength and are contributing to the workability and the retention of the strength properties of the acrylic rubber sheet, since the weight average molecular weight (Mw) of the absolute molecular weight measured by GPC-MALS exceeds 100,000, and the ratio (Mz/Mw) of the Z-average molecular weight (Mz) with respect to the weight average of the absolute molecular weight (Mw) measured by GPC-MALS focusing on the high molecular weight region is much larger than 1.3 (Examples 1 to 6, Comparative Example 1 and Reference Example 1). However, it can be understood from Table 2 that the crumb-shaped acrylic rubber (G) of Comparative Example 1 does not have sufficient processability and water resistance even though it is excellent in strength properties.

Further, from Table 2, it can be understood that in the coagulation reaction, when the coagulant liquid was added to the emulsion polymerization liquid to generate the hydrous crumbs, the ash content was not decreased and the water resistance is not sufficient, even if the hydrous crumbs are washed with water 4 times, washed with acid 1 time and washed with pure water 1 time in the washing process (Comparative Example 1). On the other hand, in the coagulation reaction, when the emulsion polymerization liquid is added to the high-concentration coagulant liquid that is vigorously stirred to generate the hydrous crumbs, the ash content is reduced and the water resistance is improved by washing with warm water twice only (Reference Example 1).

Further, in view of the relationship between the amount of sodium (Na) and the amount of sulfur (S) in the ash in Table 2, it can be understood that the total (Na+S) amount of sodium (Na) and sulfur (S) has not changed by performing coagulation and washing by the method of Reference Example 1 rather than the method of Comparative Example 1, but the sodium (Na) amount has decreased so that the Na/S ratio has decreased. This is presumed to be because the coagulant (sodium sulfate: $Na_2SO_4$ : Na ratio is high) used by performing the coagulation and cleaning method of Reference Example 1 is almost removed, but the emulsifier (sodium lauryl sulfate:$NaC_{12}H_{25}SO_4$)-derived sodium (Na) and sulfur (S) are contained in the hydrous crumbs and cannot be removed sufficiently by washing.

Further, from Table 2, it can be understood that the method of Reference Example 1 can improve the water resistance, but hardly improves the processability.

On the other hand, it can be understood that the ash content in the acrylic rubber sheet is reduced and the water resistance is significantly improved, by performing the coagulation reaction on them, washing them twice with hot water, and then dehydrating and drying them until the water content is less than 1% by weight with a screw-type extruder in the same manner as in Reference Example 1 (Examples 1 to 5). Furthermore, it can be understood that by dehydration / drying with the screw-type extruder, the amount of gel insoluble in the methyl ethyl ketone of 60% by weight or more is almost eliminated (gel amount 50% by weight or less, preferably 10% by weight or less) and the processability is remarkably improved (Comparison between Examples 1 to 5 and Comparative Example 1).

Each property value of the acrylic rubber bale of the present invention in which the acrylic rubber sheets are laminated was the same as the characteristic value of the laminated acrylic rubber sheet, although not shown in this specification.

[EXPLANATION OF REFERENCE NUMERALS]

1 Acrylic Rubber Production System
3 Coagulation Device
4 Washing Device
5 Screw-Type Extruder
6 Cooling Device
7 Baling Device

**Claims**

1. An acrylic rubber sheet comprising:

an acrylic rubber having a reactive group, having a weight average molecular weight (Mw) of 100,000 to 5,000,000, and having a ratio (Mz / Mw) of a Z-average molecular weight (Mz) with respect to the weight average molecular weight (Mw) of 1.3 or more, wherein
an ash content is 0.2% by weight or less,
an amount of gel insoluble in methyl ethyl ketone is 50% by weight or less, and
a water content is less than 1% by weight.

2. The acrylic rubber sheet according to claim 1, wherein acrylic rubber content in the acrylic rubber is 90% by weight or more.

3. The acrylic rubber sheet according to claim 1 or 2, wherein the acrylic rubber sheet is a melt kneading sheet.

4. The acrylic rubber sheet according to any one of claims 1 to 3, wherein the acrylic rubber includes: at least one (meth) acrylic acid ester selected from the group consisting of (meth) acrylic acid alkyl ester and (meth) acrylic acid alkoxyalkyl ester; a monomer containing a reactive group; and other copolymerizable monomer.

5. The acrylic rubber sheet according to any one of claims 1 to 4, wherein a total amount of sodium and sulfur in the ash is 30% by weight or more in terms of proportion to total ash content.

6. The acrylic rubber sheet according to any one of claims 1 to 5, wherein the content of at least one element selected from the group consisting of sodium, sulfur, calcium, magnesium and phosphorus in the ash is 80% by weight or more.

7. The acrylic rubber sheet according to any one of claims 1 to 6, wherein a total amount of sodium and sulfur in the ash is 70% by weight or more in terms of proportion to total ash content.

8. The acrylic rubber sheet according to any one of claims 1 to 7, wherein a ratio of sodium to sulfur in the ash ([Na]/[S]) is 0.7 to 1 by weight ratio.

9. The acrylic rubber sheet according to any one of claims 1 to 8, wherein an amount of gel insoluble in methyl ethyl ketone is 10% by weight or less.

10. The acrylic rubber sheet according to any one of claims 1 to 9, wherein a specific gravity is in the range of 0.7 to 1.5.

11. The acrylic rubber sheet according to any one of claims 1 to 10, wherein a specific gravity is in the range of 0.8 to 1.4.

12. A method for producing an acrylic rubber sheet, the method comprising:

an emulsion polymerization process to emulsify a monomer component by water and an emulsifier, the monomer containing at least one (meth) acrylic acid ester selected from the group consisting of (meth) acrylic acid alkyl ester and (meth) acrylic acid alkoxyalkyl ester, a monomer containing a reactive group, and other copolymerizable monomer as necessary, and to emulsion-polymerize the obtained emulsified monomer component in the presence of a polymerization catalyst to obtain an emulsion polymerization liquid;
a coagulation process to generate hydrous crumbs by contacting the obtained emulsion polymerization liquid with a coagulant liquid;
a washing process to wash the generated hydrous crumbs; and
a dehydration, drying, and molding process to dehydrate the washed hydrous crumbs by a dehydration barrel to a water content of 1 to 40% by weight, using a screw-type extruder provided with the dehydration barrel having a dehydration slit, a drying barrel for drying under reduced pressure, and a die at a tip end, and then to dry the dehydrated hydrous crumbs by the drying barrel to the water content of less than 1% by weight, and to extrude a sheet-shaped dry rubber from the die.

13. The method for producing an acrylic rubber sheet according to claim 12, wherein the contact of the emulsion polymerization liquid and the coagulant liquid is adding the emulsion polymerization liquid to the coagulant liquid being stirred.

14. The method for producing an acrylic rubber sheet according to claim 13, wherein a stirring speed (rotation speed) of the coagulant liquid being stirred is 100 rpm or higher.

15. The method for producing an acrylic rubber sheet according to claim 13 or 14, wherein a stirring speed (rotation speed) of the coagulant liquid being stirred is in the range of 200 to 1,000 rpm.

16. The method for producing an acrylic rubber sheet according to any one of claims 13 to 15, wherein a peripheral speed of the coagulant liquid being stirred is 0.5 m/s or higher.

17. The method for producing an acrylic rubber sheet according to any one of claims 13 to 16, wherein a peripheral speed of the coagulant liquid being stirred is 1.5 m/s or higher.

18. The method for producing an acrylic rubber sheet according to any one of claims 12 to 17, wherein a temperature of the hydrous crumbs supplied to the screw-type extruder is 40°C or higher.

19. The method for producing an acrylic rubber sheet according to any one of claims 12 to 18, wherein a rotation speed (N) of the screw-type extruder is in the range of 10 to 1,000 rpm.

20. The method for producing an acrylic rubber sheet according to any one of claims 12 to 19, wherein an extrusion rate (Q) of the screw-type extruder is 100 to 1,500 kg/hr.

21. The method for producing an acrylic rubber sheet according to any one of claims 12 to 20, wherein a ratio (Q / N) of an extrusion rate (Q) and a rotation speed (N) of the screw-type extruder is in the range of 1 to 20.

22. The method for producing an acrylic rubber sheet according to any one of claims 12 to 21, wherein a ratio (Q / N) of an extrusion rate (Q) and a rotation speed (N) of the screw-type extruder is in the range of 2 to 10.

23. The method for producing an acrylic rubber sheet according to any one of claims 12 to 22, wherein a degree of pressure reduction of a drying barrel section of the screw-type extruder is in the range of 1 to 50 kPa.

24. The method for producing an acrylic rubber sheet according to any one of claims 12 to 23, wherein a resin pressure of a die portion of the screw-type extruder is in the range of 0.1 to 10 MPa.

25. An acrylic rubber bale obtained by laminating the acrylic rubber sheet according to any one of claims 1 to 11.

26. A rubber mixture obtained by mixing a filler and a cross-linking agent to the acrylic rubber sheet according to any one of claims 1 to 11 or the acrylic rubber bale according to claim 25.

27. A method for producing a rubber mixture in which the acrylic rubber sheet according to any one of claims 1 to 11 or the acrylic rubber bale according to claim 25 is mixed with a filler and a cross-linking agent by a mixer.

28. A method for producing a rubber mixture in which the acrylic rubber sheet according to any one of claims 1 to 11 or the acrylic rubber bale according to claim 25 is mixed with a filler and then a cross-linking agent is mixed.

29. A rubber cross-linked product obtained by cross-linking the rubber mixture according to claim 26.

FIG.1

FIG.2

FIG.3

## INTERNATIONAL SEARCH REPORT

| | International application No. |
|---|---|
| | PCT/JP2020/022312 |

**A.    CLASSIFICATION OF SUBJECT MATTER**
Int.Cl. C08F6/22(2006.01)i, C08F20/18(2006.01)i, C08L33/04(2006.01)i,
C08K3/013(2018.01)i, B29C48/08(2019.01)i, B29C48/395(2019.01)i,
B29C48/92(2019.01)i
FI: C08F20/18, C08F6/22, C08K3/013, C08L33/04, B29C48/08, B29C48/395,
B29C48/92
According to International Patent Classification (IPC) or to both national classification and IPC

**B.    FIELDS SEARCHED**

Minimum documentation searched (classification system followed by classification symbols)
Int.Cl. C08F6/22, C08F20/18, C08L33/04, C08K3/013, B29C48/08, B29C48/395,
B29C48/92

Documentation searched other than minimum documentation to the extent that such documents are included in the fields searched
Published examined utility model applications of Japan          1922-1996
Published unexamined utility model applications of Japan        1971-2020
Registered utility model specifications of Japan                1996-2020
Published registered utility model applications of Japan        1994-2020

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| Y | JP 2004-131654 A (ZEON CORPORATION) 30.04.2004 (2004-04-30), paragraphs [0008], [0009], examples | 1-29 |
| Y | WO 2018/079783 A1 (ZEON CORPORATION) 03.05.2018 (2018-05-03), claims, example 1 | 1-29 |
| Y | JP 2004-143323 A (ZEON CORPORATION) 20.05.2004 (2004-05-20), paragraph [0013], examples | 12-24 |

☐    Further documents are listed in the continuation of Box C.          ☒    See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 03.08.2020 | 11.08.2020 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

| | |
|---|---|
| **INTERNATIONAL SEARCH REPORT**<br>Information on patent family members | International application No.<br>PCT/JP2020/022312 |

```
JP 2004-131654 A   30.04.2004   (Family: none)

WO 2018/079783 A1  03.05.2018   TW 201817800 A

JP 2004-143323 A   20.05.2004   (Family: none)
```

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018079783 A
- JP HI225512 B

- WO 2018143101 A
- JP H1225512 B